# EUROPÄISCHE PATENTSCHRIFT

(11) **EP 1 456 551 B1**
(45) Veröffentlichungstag und Bekanntmachung des Hinweises auf die Patenterteilung: **26.10.2005**
(21) Anmeldenummer: 02787801.6
(22) Anmeldetag: 25.11.2002
(51) Int. Cl.: F16D 33/16

(54) **HYDRODYNAMISCHE BAUEINHEIT**
HYDRODYNAMIC ASSEMBLY
ENSEMBLE HYDRODYNAMIQUE

(30) Priorität: 21.12.2001 DE 10163485
(43) Veröffentlichungstag der Anmeldung: 15.09.2004
(73) Patentinhaber: Voith Turbo GmbH & Co. KG, 89522 Heidenheim (DE)
(72) Erfinder: KLEMENT, Werner, 89520 Heidenheim (DE); VOGELSANG, Klaus, 74564 Crailsheim (DE); BECKE, Martin, 89075 Ulm (DE); KERNCHEN, Reinhard, 74589 Satteldorf (DE); DIELE, Karl-Heinz, 74589 Satteldorf-Ellrichshausen (DE)
(74) Vertreter: Dr. Weitzel & Partner
(86) Internationale Anmeldenummer: PCT/EP2002/013224
(87) Internationale Veröffentlichungsnummer: WO 2003/054407

(56) Entgegenhaltungen:
- WO-A-00/55020
- FR-A- 903 776
- US-A- 3 716 995

## Beschreibung

Die Erfindung betrifft eine hydrodynamische Baueinheit, im einzelnen mit den Merkmalen aus dem Oberbegriff des Anspruches 1. Eine solche Baueinheit ist aus FR-A-903 776 bekannt.

Hydrodynamische Baueinheiten werden in Getriebebaueinheiten als Anfahreinheit eingesetzt. Denkbar ist auch die Ausführung als kombinierte Anfahr- und/oder Bremseinrichtung. Aus der Druckschrift WO 00/55020 ist eine Ausführung einer Anfahreinheit bekannt, welche ein hydrodynamisches Bauelement in Form einer hydrodynamischen Kupplung und eine Überbrückungskupplung umfaßt. Die hydrodynamische Kupplung und die Überbrückungskupptung sind parallel geschaltet. In der Regel weisen derartige hydrodynamische Kupplungen eine sogenannte Pumpenradschale auf, welche drehfest mit dem Primärschaufelrad verbunden ist. Diese umschließt das Sekundärschaufelrad in axialer Richtung und in radialer Richtung fast vollständig. Um während des Betriebes der hydrodynamischen Kupplung die entstehende Wärme abzuführen, ist dieser in der Regel ein externer Kühlmittelkreislauf zugeordnet, über welchen Betriebsmittel aus dem Arbeitsraum nach außerhalb des Arbeitsraumes geführt wird und nach Kühlung wieder in den Arbeitsraum eintritt. Derartige durchflußgesteuerte Kupplungen sind für eine Vielzahl von Einsatzfällen, insbesondere für stationäre Anwendungen bekannt. In der Regel wird zur Realisierung eines Betriebsmittelumlaufes außerhalb des torusförmigen Arbeitsraumes ein Schöpfrohr verwendet, welches das Betriebsmittel aus der rotierenden Pumpenradschale aufnimmt und wieder dem Eintritt in den torusförmigen Arbeitsraum zuführt. Für Ausführungen als Anfahreinheit in Getriebebaueinheiten stellt sich dabei die Problematik, daß derartige hydrodynamische Baueinheiten in axialer Richtung enormen Bauraum benötigen, welche insbesondere für den Einsatz in Fahrzeugen nicht zur Verfügung steht. Eine Alternative besteht im Vorsehen einer separaten Füllpumpeneinrichtung, welche den hydrodynamischen Kreislauf außerhalb des torusförmigen Arbeitsraumes unterstützt. Allerdings ist auch diese Ausführung mit Zusatzaufwand verbunden. Ein wesentlicher Nachteil besteht auch darin, daß die Durchsatzmenge von der Menge des aus dem torusförmigen Arbeitsraum austretenden Betriebsmittels während des Betriebes und den Gegebenheiten des externen Kreislaufes abhängt. Insbesondere für den Einsatz in Fahrzeugen muß jedoch aufgrund der Dauerbelastung mit sehr hohen Durchsatzmengen gerechnet werden. Diese stellen ein wesentliches Problem dar, welche ohne zusätzliche Hilfsmittel nicht befriedigend erzielt werden können.

Der Erfindung liegt daher die Aufgabe zugrunde, eine hydrodynamische Baueinheit für den Einsatz als Anfahr- und/oder Bremseinheit derart weiter zu entwickeln, daß in allen Betriebszuständen eine optimale Betriebsweise gewährleistet wird, insbesondere eine optimale Betriebsmitteltemperatur gewährleistet werden kann. Dies bedeutet, daß aufgrund der sehr hohen Drehzahl beim Einsatz in Fahrzeugen ein sehr hoher Durchsatz im externen Kreislauf erzielt werden muß. Die erfindungsgemäße Lösung soll sich dabei durch einen möglichst geringen konstruktiven Aufwand auszeichnen, wobei die axiale Baulänge möglichst gering zu halten ist.

Die erfindungsgemäße Lösung ist durch die Merkmale des Anspruchs 1 charakterisiert. Vorteilhafte Ausgestaltungen sind in den Unteransprüchen wiedergegeben.

Die hydrodynamische Baueinheit umfaßt einen Eingang und einen Ausgang und ein dazwischen angeordnetes hydrodynamisches Bauelement, umfassend ein mit dem Eingang wenigstens mittelbar, d. h. direkt oder indirekt drehfest verbundenes Primärschaufelrad und ein mit dem Ausgang drehfest verbindbares Sekundärschaufelrad, die miteinander einen Arbeitsraum bilden, der torusförmig ist. Das hydrodynamische Bauelement ist frei von einem Leitrad, d.h. es handelt sich lediglich um eine Drehzahlwandlungseinrichtung, so daß für eine bestimmte vorgegebene zu übertragende Leistung lediglich eine Variation hinsichtlich der Drehzahl an der Abtriebsseite möglich ist. Zwischen An- und Abtriebsseite, d.h. Primär- und Sekundärschaufelrad, herrscht dabei Momentengleichheit. Beide Schaufelräder sind des weiteren von einem ruhenden Gehäuse umschlossen. Dies bedeutet, daß das hydrodynamische Bauelement frei von einer mit dem Primärschaufelrad drehfest gekoppelten und das Sekundärschaufelrad in axialer und in Umfangsrichtung umschließenden Primärschaufelradschale ist. Im vom ruhenden Gehäuse gebildeten Innenraum sind somit lediglich die beiden Schaufelräder - Primärschaufelrad und Sekundärschaufelrad - angeordnet. Das ruhende Gehäuse bietet dabei den Vorteil, daß insbesondere bei füllungsgradgesteuerten hydrodynamischen Bauelementen in Form von hydrodynamischen Kupplungen, bei welchen das Sekundärschaufelrad drehfest im Betrieb mit dem Ausgang verbunden ist, den Druck als zu verarbeitende Eingangsgröße im ruhenden Gehäuse als proportionale Größe zum Füllungsgrad abgegriffen werden kann, wobei der Abgriff im ruhenden Gehäuse relativ einfach zu bewerkstelligen ist und der dafür erforderliche Aufwand sehr gering gehalten werden kann. Die Innenwand des ruhenden Gehäuses und die Außenumfänge von Primärschaufelrad und Sekundärschaufelrad begrenzen dabei in axialer Richtung jeweils einen Schaufelradnebenraum. Im Schaufelradnebenraum sind keine weiteren in axialer Richtung angeordneten und sich in radialer Richtung erstreckenden Trennwände vorgesehen. In radialer Richtung ist zwischen dem Gehäuse und den Außenumfängen der Schaufelräder ein Spalt vorgesehen. Wenigstens ein Teil des Spaltes ist gegenüber dem restlichen Innenraum, d.h. den Schaufelradnebenräumen abgedichtet. An einem der beiden Schaufelräder ist ferner mindestens ein Austritt aus dem Arbeitsraum vorgesehen, welcher in den mittels des berührungsfreien Dichtsystems gegenüber den Schaufelradnebenräume abgedichteten Teil des Spaltes mündet. Das Betriebsmittel aus dem Spalt wird des weiteren über das ruhende Gehäuse mit oder ohne Zwischenspeicherung oder über in diesem angeordnete Kanäle oder Hohlräume abgeführt. Zu diesem Zweck ist der radiale Spalt mit mindestens einem Hohlraum im Gehäuse gekoppelt. Während des Betriebes des hydrodynamischen Bauelementes gelangt Betriebsmittel aus dem Arbeitsraum über den Austritt in den Spalt. Dadurch baut sich in diesem Raum ein hoher nutzbarer Druck auf, welcher proportional zum Druck im Arbeitsraum ist.

Unter einem weiteren Aspekt der Erfindung liegt die Größe des abgedichteten Teils des Spaltes in radialer Richtung durch eine Größenangabe im Bereich zwischen 0 und einschließlich 25 % des Querschnittes von Ein- und Austritt in bzw. aus dem Arbeitsraum. Dadurch baut sich in diesem Raum ein sehr hoher nutzbarer Druck auf, welcher aufgrund der hohen Druckdifferenz zwischen diesem Raum und dem Eintritt bzw. Zufuhrraum zum torusförmigen Arbeitsraum der Aufrechterhaltung eines Betriebsmittelstromes vom Arbeitsraum zum Arbeitsraum in allen Betriebszuständen der hydrodynamischen Kupplung bei Führung in einem Kreislauf gewährleistet. Das Betriebsmittel wird dabei als Teilströmung zum eigentlichen Arbeitskreislauf im torusförmigen Arbeitsraum über Kanäle im Gehäuse oder über ein Leitungssystem geführt. Die Zufuhr erfolgt wiederum zum Eintritt in den Arbeitsraum des hydrodynamischen Bauelementes. Insbesondere bei druckdichter Ausführung des geschlossenen Kreislaufes, welcher vom Arbeitskreislauf im torusförmigen Arbeitsraum und im externen Teil, welcher außerhalb des Arbeitsraumes geführt wird, gebildet wird, kann ein durch das hydrodynamische Bauelement selbst erzeugter Druck im Gesamtsystem aufrechterhalten werden. Dieser Kreislauf funktioniert dabei frei von zusätzlichen Fördereinrichtungen und ist dabei nicht an entsprechende Restriktionen bezüglich der Leitungsführung gebunden. Der externe Teil des geschlossenen Kreislaufes kann dabei für sich allein schon als Kühlkreislauf bezeichnet werden, da über die Leitungsverbindungen zwischen dem Ablauf und dem Zulauf Wärme durch Wärmestrahlung abgeführt werden kann. Zusätzlich können in vorteilhafter Weise Kühleinrichtungen in diesen integriert werden. Zur druckdichten Ausführung ist dabei erforderlich, daß sowohl die beiden Schaufelräder gegenüber dem Gehäuse abgedichtet werden, d.h. dichtend geführt, und des weiteren, daß zwischen dem Primärschaufelrad und dem Sekundärschaufelrad ebenfalls im radial inneren Bereich, d.h. unterhalb einer radialen Erstreckung des torusförmigen Arbeitsraumes eine Dichtung vorgesehen ist. Diese Dichtungen sind vorzugsweise alle als berührende Dichtungen ausgeführt. Ausführungen mit Drehdurchführungen sind ebenfalls denkbar.

Unter einem weiteren Aspekt können bei druckdichter Ausführung des geschlossenen Kreislaufes Mittel zur Erzeugung eines Beeinflussungsdruckes auf das im geschlossenen Kreislauf geführte Betriebsmittel vorgesehen werden, d. h. es besteht zusätzlich die Möglichkeit, den Füllungsgrad des hydrodynamischen Bauelementes zu steuern. Unter einem weiteren Aspekt ist im geschlossenen Kreislauf mindestens eine Knotenstelle zum wahlweisen Anschluß von Mitteln zur Befüllung und/oder Entleerung und/oder Mittel zur Druckvorgabe im System angeordnet. Die Mittel zur Druckvorgabe sind dabei vorzugsweise druckdicht an den geschlossenen Kreislauf angeschlossen und dienen der Erzeugung eines statischen Überlagerungsdruckes im geschlossenen Kreislauf. Vorzugsweise umfassen die Mittel zur Druckvorgabe einen druckdicht abgeschlossenen Behälter, welcher druckdicht mit dem geschlossenen Kreislauf verbunden ist. Die Druckvorgabe erfolgt dabei durch Aufbringen eines Druckes auf den Behälterspiegel. Eine andere Möglichkeit besteht in der Erzeugung eines Druckes durch zusätzliche Elemente. Entscheidend ist jedoch, daß durch Aufbringen eines Druckes im geschlossenen Kreislauf eine Möglichkeit der Steuerung und Regelung bei Rückführung gegeben ist. Insbesondere für die Regelung ist es besonders günstig, wenn die Regelgröße, d.h. der Druck, in optimaler Weise wie mit der erfindungsgemäßen Lösung im ruhenden Gehäuse abgegriffen werden kann und eine entsprechend zuverlässige Aussage über den Druck im Arbeitsraum ermöglicht.

Die Mittel zur Befüllung umfassen in der Regel eine Betriebsmittelspeichereinrichtung und Mittel zum Betriebsmitteltransport. Unter einem weiteren Aspekt der Erfindung werden zur Vereinfachung des Gesamtsystems die Mittel zur Befüllung und Entleerung und die Mittel zur Druckvorgabe von einem System gebildet. Die Befüllung und Entleerung erfolgt dabei vorzugsweise ebenfalls über den druckdicht an das geschlossene System angeschlossenen Behälter und Ausübung eines Druckes auf den Behälterspiegel oder über Pumpeinrichtungen.

Für die Ausführung der Dichtungen selbst, insbesondere des berührungsfreien Dichtsystems bestehen eine Vielzahl von Möglichkeiten. Dieses umfaßt vorzugsweise zwei in Umfangsrichtung verlaufende berührungsfreie Dichtungen zwischen den Schaufelrädern und dem Gehäuse. Vorzugsweise sind die berührungsfreien Dichtungen als Labyrinthdichtungen ausgeführt. Dabei kann das Labyrinth als einseitiges oder zweiseitiges Labyrinth ausgestaltet werden. Die Labyrinthdichtung kann ferner als axiales oder radiales Labyrinth oder eine Mischform ausgeführt sein. Die einzelnen Möglichkeiten können miteinander kombiniert werden. Gemäß einer besonders vorteilhaften Ausgestaltung wird jedoch ein einseitiges axiales Labyrinth verwendet, wobei die Dichtflächen, welche vom Gehäuse gebildet werden, vorzugsweise eben ausgeführt sind. Dies bietet den Vorteil, daß standardisierte Gehäuse verwendet werden können, an deren Herstellung nur geringe Anforderungen hinsichtlich der Genauigkeit zu stellen sind. Die jeweils dazu komplementäre Dichtfläche, welche von Vorsprüngen und Ausnehmungen, die in alternierender Weise angeordnet sind, geprägt wird, kann dann an einem der Schaufelräder oder an beiden angeordnet sein. Entscheidend ist, daß die beiden Dichtstellen beidseitig eines Austrittes aus dem Arbeitsraum angeordnet sind.

Bei Ausführungen mit zweiseitigem Labyrinth ist dieses vorzugsweise als radiales Labyrinth ausgerichtet, wobei die Vorsprünge und Ausnehmungen einer Dichtfläche jeweils in Arbeitsraum ausgerichtet sind. Diese Möglichkeit ist durch eine einfache Montage charakterisiert.

Bezüglich der Anordnung der Dichtungen können folgende Möglichkeiten unterschieden werden:
a) Anordnung der ersten berührungsfreien Dichtung zwischen Sekundärschaufelrad und Gehäuse und Anordnung der zweiten berührungsfreien Dichtung zwischen Primärschaufelrad und Gehäuse und Austritt aus dem Arbeitsraum im Bereich der Trennebene T zwischen Sekundärschaufelrad und Primärschaufelrad
b) Anordnung der ersten berührungsfreien Dichtung zwischen Sekundärschaufelrad und Gehäuse und Anordnung der zweiten berührungsfreien Dichtung zwischen Primärschaufelrad und Gehäuse und Austritt aus dem Arbeitsraum am Primärschaufelrad
c) Anordnung der berührungsfreien Dichtung am Sekundärschaufelrad im Bereich der Trennebene und am Primärschaufelrad in Arbeitsraum hinter dem Austritt aus dem Arbeitsraum
d) Anordnung beider berührungsfreien Dichtungen zwischen dem Primärschaufelrad beidseits eines Austrittes am Primärschaufelrad
e) Anordnung der beiden Dichtungen zwischen einem drehfest mit dem Primärschaufelrad gekoppelten Element und dem Gehäuse und Anordnung des Austrittes am Primärschaufelrad

Die unter e) genannte Möglichkeit beinhaltet des weiteren die Ausgestaltung eines Spaltes in radialer Richtung zwischen dem Außenumfang des Sekundärschaufelrades und dem drehfest mit dem Primärschaufelrad gekoppelten Element. Dieses Element ist ringförmig ausgeführt und wird bei Ausbildung der Dichtungen als Labyrinth auch als Labyrinthring bezeichnet. Das ringförmige Element erstreckt sich dabei in axialer Richtung über einen Teil der axialen Erstreckung des Sekundärschaufelrades und bildet in radialer Richtung mit dem Außenumfang des Sekundärschaufelrades einen Spalt sehr geringer Größe, wobei dieser Spalt eine Spaltdichtung bildet. Das heißt, in diesem Fall ist zusätzlich noch eine weitere berührungsfreie Dichtung zwischen dem Sekundärschaufelrad und dem Labyrinthring vorgesehen. Die Lösung mit dem Labyrinthring bietet den Vorteil, daß hier auf standardmäßige Schaufelräder zurückgegriffen werden kann, die lediglich durch das Bauelement Labyrinthring ergänzt werden müssen. Eine Anpassung der Ausgestaltung des Primärschaufelrades selbst ist nicht erforderlich.

Die erfindungsgemäße Lösung bietet den Vorteil, daß die hydrodynamische Baueinheit als völlig autarke Einheit für unterschiedliche Anwendungszwecke vormontiert und geliefert werden kann. Diese kann dann mit anderen Komponenten zu einer Gesamteinheit zusammengefügt werden. Beispielsweise kann diese für den Einsatz in Automat- oder Schaltgetriebebaueinheiten, insbesondere mit Eignung für den Einsatz im automatisierten Schaltgetriebe mit einer Überbrückungskupplung kombiniert werden. Ferner kann gemäß einer besonders vorteilhaften Ausgestaltung zur Erzielung positiver Effekte das hydrodynamische Bauelement als Anfahrelement ausgestaltet werden, wobei das hydrodynamische Bauelement in Form der hydrodynamischen Kupplung als Anfahrelement fungiert, dessen Antrieb mit dem Eingang und dessen Abtrieb mit dem Ausgang gekoppelt ist, wobei zwischen dem Abtrieb des Anfahrelementes und dem Ausgang der hydrodynamischen Baueinheit und damit der Anfahreinheit ein Freilauf vorgesehen ist. Dieser Freilauf ermöglicht als richtungsgeschaltete Kupplung dabei folgende Funktionszustände:
1. Ist die Drehzahl auf der Abtriebsseite des Anfahrelementes, d.h. dem Turbirienrad, gleich der am Ausgang wird ein Moment vom Turbinenrad auf den Ausgang übertragen.
2. Ist die Drehzahl des Turbinenrades, d.h. des Abtriebes des hydrodynamischen Bauelementes, geringer als am Ausgang der hydrodynamischen Baueinheit wird über das Turbinenrad, d.h. das Sekundärschaufelrad, kein Moment auf den Ausgang übertragen. Das Sekundärschaufelrad läuft frei. Diese Lösung bietet neben der Realisierung eines nahezu verschleißfreien Anfahrvorganges den Vorteil, daß während des Schaltvorganges das hydrodynamische Bauelement nicht entleert werden muß und auch keine zusätzliche drehende Kupplung zur Leistungsunterbrechung erforderlich ist. Die Abkopplung des Einganges und damit der Getriebeeingangswelle von den nachgeordneten Schaltstufen erfolgt allein über den Freilauf und sichert somit die Funktion der Synchroneinrichtung im Schaltgetriebe.

Unter einem weiteren Aspekt der Erfindung ist zusätzlich eine Überbrückungskupplung vorgesehen, die parallel zum hydrodynamischen Bauelement geschaltet ist, jedoch nur während zeitlich geringer oder definierten Phasen gemeinsam mit dem hydrodynamischen Bauelement in Eingriff ist, wobei der Leistungsfluß zwischen dem Eingang und dem Ausgang der Anfahreinheit unterbrechbar ist. Diese Unterbrechbarkeit kann dabei beim Einsatz der Anfahreinheit in automatisierten Schaltgetrieben mit dem der Anfahreinheit nachgeordneten mechanischen Getriebeteil durch die Schaltbarkeit der Überbrückungskupplung bei gleichzeitiger Entleerung bzw. bereits geleerter hydrodynamischer Kupplung oder beim Einsatz in automatisierten Schaltgetrieben mit mechanischem Getriebeteil oder Nach- bzw. Gruppenschaltsatz beim Umschalten zwischen den unteren Gangstufen durch die Entleerung der hydrodynamischen Kupplung, d. h. des hydrodynamischen Bauelementes, erfolgen. Vorzugsweise werden bei einer derartigen Ausführung die Abtriebsseiten der hydrodynamischen Kupplung und der Überbrückungskupplung drehfest miteinander über den Freilauf gekoppelt. Der Vorteil einer derartigen Anordnung wiederum besteht im wesentlichen darin, daß nur zwei Zustände bezüglich der Leistungsübertragung unterschieden werden müssen, wobei diese rein mechanisch über die Überbrückungskupplung oder hydrodynamisch über das hydrodynamische Bauelement erfolgt. Durch die geeignete Ansteuerung können dabei zusätzlich die Vorteile der hydrodynamischen Leistungsübertragung für bestimmte Fahrzustände optimal genutzt werden. Zusätzlich besteht die Möglichkeit, bei Ausführung mit Freilauf durch Zuordnung einer Einrichtung zum wahlweisen Festhalten des Sekundärschaufelrades das im Traktionsbetrieb als hydrodynamische Kupplung betreibbare Element wahlweise auch als hydrodynamischen Retarder zu betreiben und damit eine verschleißfreie Bremseinrichtung unter Ausnutzung vorhandener Bauelemente zu ermöglichen. Eine separate hydrodynamische Bremseinrichtung, welche insbesondere beim Einsatz in Nutzfahrzeugen Verwendung findet, kann dabei entfallen. Die Ventilationsverluste dieses Retarders beim Einsatz der hydrodynamischen Baueinheit als kombinierte Anfahr-/Bremseinheit sind im Vergleich zum konventionellen Retarder gering. Die Einrichtung zum Festhalten bzw. zur Ankopplung des Sekundärschaufelrades am Gehäuse ist im einfachsten Fall als Bremseinrichtung vorzugsweise in Scheibenbauweise ausgeführt. Diese wird am Abtrieb der hydrodynamischen Kupplung, d.h. am Sekundärschaufelrad, wirksam. Die Anbindung des Bremselementes am Sekundärschaufelrad erfolgt dabei zwischen Turbinenrad und Freilauf.

Die erfindungsgemäße Lösung wird nachfolgend anhand von Figuren erläutert. Darin ist im einzelnen folgendes dargestellt::
- Figur 1: verdeutlicht in schematisch vereinfachter Darstellung den Grundaufbau einer erfindungsgemäß gestalteten hydrodynamischen Baueinheit;
- Figur 2a: verdeutlicht in schematisch vereinfachter Darstellung eine weitere Ausführungen einer erfindungsgemäß gestalteten hydrodynamischen Baueinheit mit im Gehäuse vollständig integriertem externen Kreislauf;
- Figur 2b: verdeutlicht in schematisch vereinfachter Darstellung eine weitere Ausführungen einer erfindungsgemäß gestalteten hydrodynamischen Baueinheit mit im Gehäuse teilweise integriertem externen Kreislauf;
- Figur 3a bis 3c: verdeutlichen unterschiedliche Ausführungen der Dichtflächen;
- Figur 4: verdeutlicht eine Ausführung mit Anordnung des Dichtsystems auf einem Labyrinthring;
- Figur 5a bis 5d: zeigen Anordnungen eines Austrittskanales;
- Figur 6a und 6b: verdeutlichen in schematisch vereinfachter Darstellung Ausführungen der Querschnittsverläufe eines Austrittskanales;
- Figuren 7a und 7b: verdeutlichen mögliche Querschnitte eines Austrittskanales;
- Figur 8a und 8b: verdeutlichen in schematisch vereinfachter Darstellung mögliche Anwendungen einer erfindungsgemäß gestalteten hydrodynamischen Baueinheit;
- Figur 9: verdeutlicht die Möglichkeit der Füllungsgradsteuerung für eine Ausführung gemäß Figur 2b;
- Figur 10: verdeutlicht eine spiralförmige Ausgestaltung eines im Gehäuse mit dem Eintritt und dem Austritt gekoppelten Kanals zur Betriebsmittelführung im geschlossenen Kreislauf.

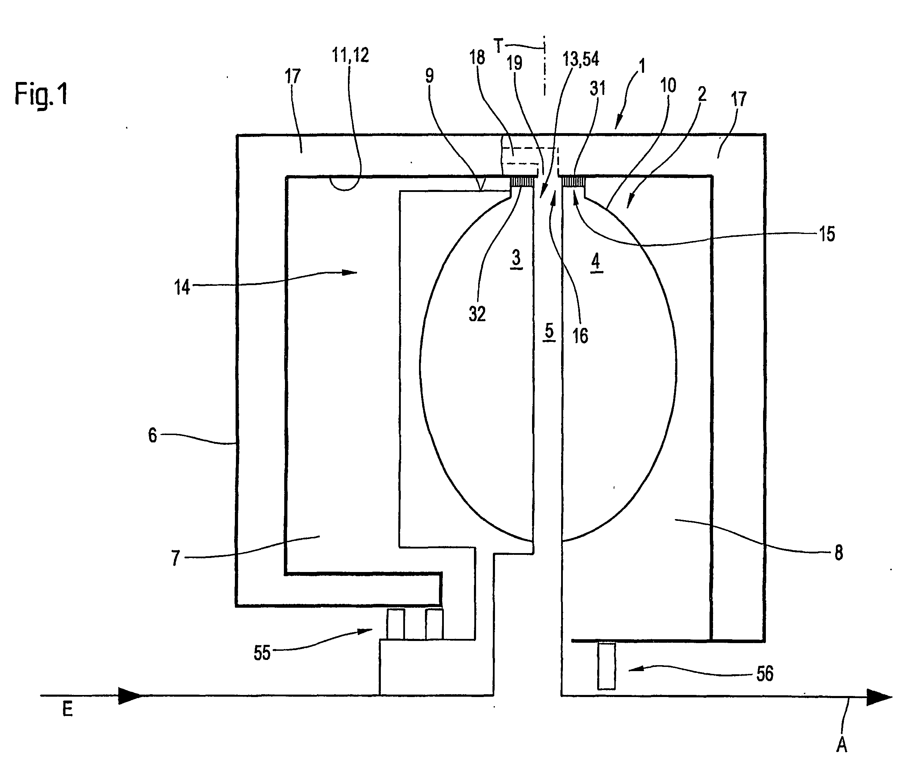

Die Figur 1 verdeutlicht anhand einer schematisch vereinfachten Darstellung den Grundaufbau einer erfindungsgemäß gestalteten hydrodynamischen Baueinheit 1 mit einem Eingang E und einem Ausgang A. Diese umfaßt ein hydrodynamisches Bauelement 2. Das hydrodynamische Bauelement weist ein drehfest mit dem Eingang E verbundenes Primärschaufelrad 3 und ein drehfest mit dem Ausgang A koppelbares Sekundärschaufelrad 4 auf, die miteinander einen Arbeitsraum 5 bilden, welcher torusförmig ausgestaltet ist. Das hydrodynamische Bauelement 2 ist frei von einem Leitrad. Entsprechend der Lagerung und drehfesten Anbindung von Primärschaufelrad 3 und Sekundärschaufelrad 4 ist das hydrodynamische Bauelement 2 als hydrodynamische Kupplung und wahlweise zusätzlich als Bremseinrichtung betreibbar. Bei Ausführung des hydrodynamischen Bauelementes 2 als hydrodynamische Kupplung fungiert im Traktionsbetrieb bei Leistungsübertragung vom Eingang E zum Ausgang A das Primärschaufelrad 3 als Pumpenrad und das Sekundärschaufelrad 4 als Turbinenrad. Die hydrodynamische Baueinheit 1 umfaßt ferner ein ruhendes Gehäuse 6, welches die beiden Schaufelräder in axialer und radialer Richtung unter Bildung wenigstens zweier sogenannter Schaufelradnebenräume 7 und 8 umschließt. Die hydrodynamische Baueinheit 1 ist ferner frei von einer drehfest mit dem Primärschaufelrad 3 gekoppelten Primäradschale. Dies bedeutet, daß die Schaufelradnebenräume 7 und 8 direkt von den Außenumfängen der einzelnen Schaufelräder - dem Außenumfang 9 des Primärschaufelrades 3 und dem Außenumfang 10 des Sekundärschaufelrades 4 und der Innenwand 11 des ruhenden Gehäuses 6 - gebildet bzw. begrenzt werden. Die beiden Schaufelradnebenräume 7 und 8 bilden den Gehäuseinnenraum 14. In radialer Richtung ist zwischen der Innenwand 11 des Gehäuses 6, insbesondere der zu den Schaufelrädern - Primärschaufelrad 3 und Sekundärschaufelrad 4 - gerichteten Fläche oder Flächen 12 und den beiden Schaufelrädern - Primärschaufelrad 3 und Sekundärschaufelrad 4 - ein Spalt 13 vorgesehen. Dieser bzw. wenigstens ein Teil dessen ist gegenüber dem restlichen Gehäuseinnenraum 14, d. h. den Schaufelradnebenräumen 7 und 8, mittels eines berührungsfreien Dichtungssystems 15 abgedichtet. Der abgedichtete Teil des Spaltes 13 wird mit 54 bezeichnet. Am Primärschaufelrad 3 oder, wie in der Figur 1 dargestellt im Bereich der Trennebene T zwischen den beiden Schaufelrädern 3 und 4 ist ein Austritt 16 aus dem torusförmigen Arbeitsraum 5 angeordnet. Dieser mündet in den abgedichteten Teil 54 des Spaltes 13. Die Schaufelräder, Primärschaufelrad 13 und Sekundärschaufelrad 14 bzw. die drehfest mit diesen gekoppelten Elemente, sind dicht im Gehäuse 6 geführt. Zwischen dem Eingang E bzw. einem wenigstens mittelbar drehfest mit diesem und dem Primärschaufelrad 3 gekoppelten Element und dem Gehäuse 6 ist wenigstens eine berührende Richtung 55 vorgesehen. Dies gilt in Analogie auch für den Ausgang A bzw. dem mit diesem wenigstens mittelbar drehfest gekoppelten Sekundärschaufelrad 4. Die Dichtung zwischen Sekundärschaufelrad 4 bzw. dem Ausgang A oder einem wenigstens mittelbar, d.h. direkt oder indirekt über weitere Übertragungselemente mit diesem gekoppelten Sekundärschaufelrad 4 ist mit 56 bezeichnet.

Der abgedichtete Teil 54 des Spaltes 13 wiederum ist mit einem Raum außerhalb des Gehäuseinnenraumes 14 verbunden. Vorzugsweise erfolgt die Kopplung über in der Wand 17 des Gehäuses 6 angeordnete Kanäle oder Hohlräume 18. Dazu ist am Gehäuse 6 wenigstens ein Eintritt 19 vorgesehen, welcher mit dem abgedichteten Teil 54 des Spaltes 13 gekoppelt ist.

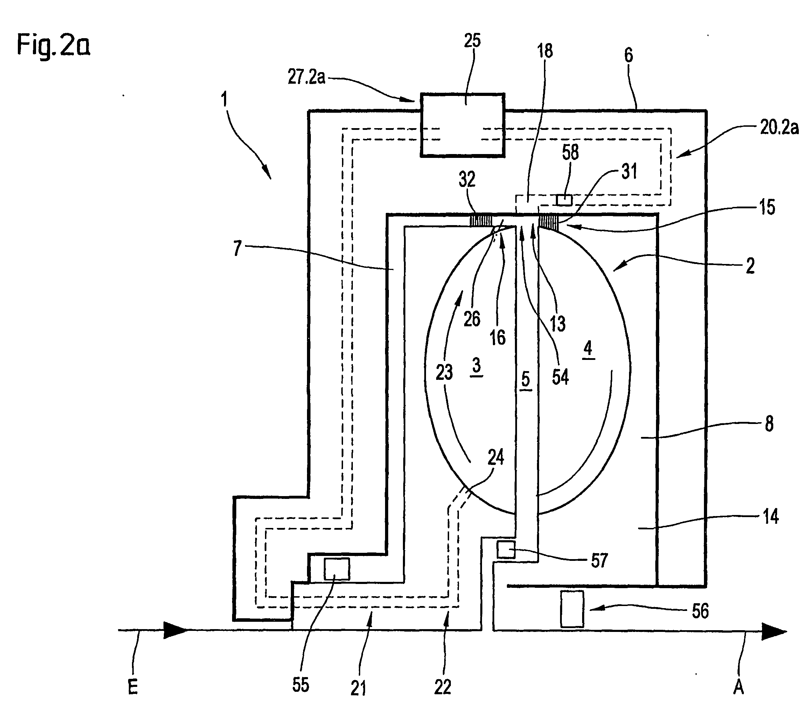

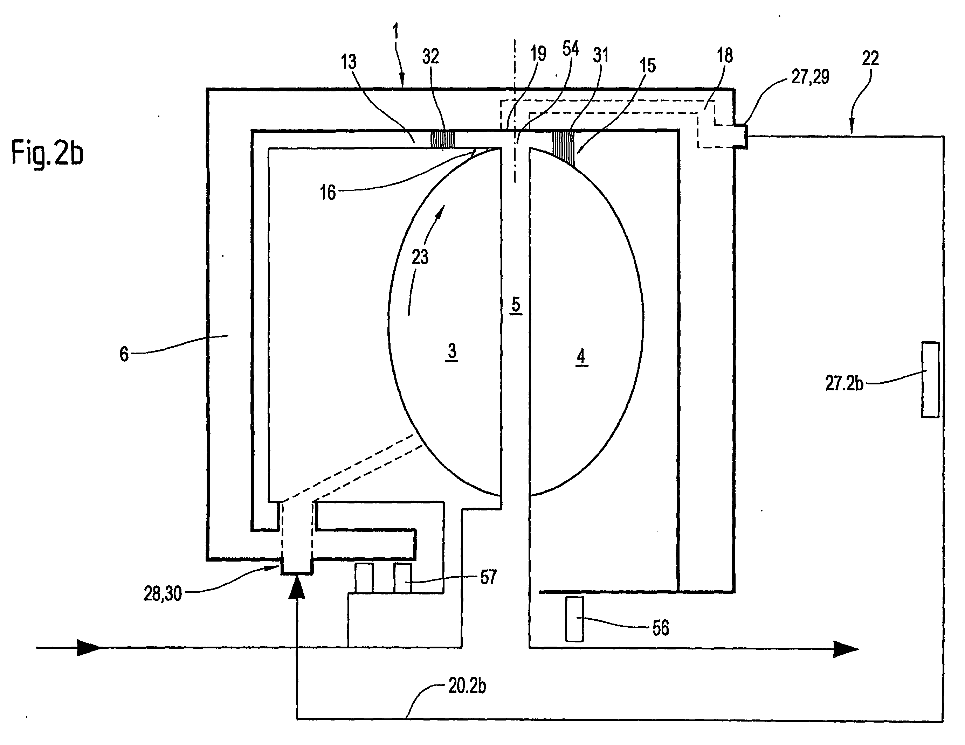

Die erfindungsgemäße Lösung ermöglicht es, Betriebsmittel aus dem torusförmigen Arbeitsraum 5 mit hohem Druck in den abgedichteten Teil 54 des Spaltes 13 und von diesem über den Eintritt 19 am Gehäuse 6 zu führen. Aufgrund des hohen Druckes kann das Betriebsmittel ohne zusätzliche Hilfsmittel, beispielsweise Pumpeinrichtungen, in einem zum Arbeitsraum 5 externen Kreislauf 20 geführt werden. Dieser externe Kreislauf 20 ist in den Figuren 2a und 2b für eine Ausführung gemäß Figur 1 dargestellt. Dieser ist dem hydrodynamischen Bauelement 2, insbesondere dem Arbeitsraum 5 zugeordnet. Der externe Kreislauf 20 kann dabei, wie in der Figur 2a schematisch dargestellt vollständig im ruhenden Gehäuse 6 integriert sein. Dieser ist dabei mit 20.2a bezeichnet. Diese Lösung stellt eine besonders vorteilhafte Ausführung dar, da hier bereits ein vollständiges System aus hydrodynamischer Baueinheit 1 mit integriertem externen Kreislauf 20.2a vormontiert angeboten werden kann. Dieser externe Kreislauf 20.2a ist Bestandteil eines Betriebsmittelversorgungssystems 21, welches im einfachsten Fall bei Ankoppelung an eine Betriebsmittelquelle aus dieser und dem geschlossenen Kreislauf 22 besteht. Dabei besteht ebenfalls die Möglichkeit, das gesamte Betriebsmittelversorgungssystem 21 im Gehäuse 6 der hydrodynamischen Baueinheit 1 zu integrieren. Eine weitere denkbare Möglichkeit besteht darin, daß Betriebsmittelversorgungssystem 21 aus geschlossenem Kreislauf 23, extemem Kreislauf 20.2a und weiteren Komponenten, die auch Bestandteil anderer Betriebsmittelversorgungssysteme oder eines zentralen Betriebsmittelversorgungssystems sein können, zu bilden. Der geschlossene Kreislauf 20.2a, welcher Bestandteil des Betriebsmittelversorgungssystems 21 ist, kann dabei zum einen als Kühlkreislauf verwendet werden, welcher bei Betrieb des hydrodynamischen Bauelementes 2 immer eine bestimmte Menge an Betriebsmittel aus dem Arbeitskreislauf 23 im torusförmigen Arbeitsraum 5 abzweigt und extern über den Kreislauf 20.2a diesem wieder zuführt. Der externe Kreislauf 20.2a ist Bestandteil des geschlossenen Kreislaufes 22, der zusätzlich den sich im torusförmigen Arbeitsraum 5 einstellenden Arbeitskreislauf 23 umfaßt. Der externe Kreislauf 20.2a ist dazu mit mindestens einem Austritt 16 aus dem torusförmigen Arbeitsraum 5 und einem Eintritt 24 in den torusförmigen Arbeitsraum gekoppelt. Im externen Kreislauf 20.2a können Kühleinrichtungen 27.2a, beispielsweise in Form von Wärmetauschern 25, vorgesehen werden. Die Kühlung kann dabei allein durch den Umlauf oder, wie hier dargestellt, indirekt über einen Wärmetauscher 25 erfolgen. Ferner wird der externe Kreislauf 20.2a des geschlossenen Kreislaufes 22 dazu genutzt, um den Füllungsgrad des hydrodynamischen Bauelementes 2 zu steuern. Im torusförmigen Arbeitsraum 5 stellt sich dabei bei Betrieb des hydrodynamischen Elementes 2 ein sogenannter Arbeitskreislauf 23 ein, welcher auch als hydrodynamischer Kreislauf bezeichnet wird. Dieser ist im geschlossenen Kreislauf 22 integriert. Dem Arbeitskreislauf 23 ist dabei mindestens der Austritt 16 in Form eines Kanals 26 und ein Eintritt 24 zugeordnet. Der geschlossene Kreislauf 22 ist als geschlossenes Drucksystem ausgeführt, d.h. druckdicht. Zu diesem Zweck ist zwischen Primärschaufelrad 3 und Sekundärschaufelrad 4 zusätzlich im Bereich der Innenabmessungen des torusförmigen Arbeitsraumes 5 wenigstens eine Dichtung 57 vorgesehen. Diese ist als berührende Dichtung ausgeführt. Die druckdichte Ausführung bietet den Vorteil, durch Aufringen eines Übertagerungsdruckes den Füllungsgrad aktiv steuern und zusätzlich regeln zu können.

Gegenüber der in der Figur 2a dargestellten Ausführung der Führung des externen Kreislaufes 20.2a vollständig im Gehäuse 6, verdeutlicht die in der Figur 2b dargestellte Ausführung die Führung des externen Teiles 20.2b schematisiert dargestellt nur teilweise im ruhenden Gehäuse 6. In diesem Fall weist das Gehäuse 6 Anschlüsse 27 und 28 auf, welche mindestens einen Austritt 29 aus dem Gehäuse und einen Eintritt 30 in das Gehäuse für einen Teil des externen Kreislaufes 20.2b verdeutlichen, hier der Anschluß 27 den Austritt 29 und der Anschluß 28 den Eintritt 30 in das Gehäuse 6.

Im extern, d. h. wenigstens teilweise außerhalb des Gehäuses 6 geführtem Kreislaufteil 20.2b des geschlossenen Kreislaufes 22 sind dabei Mittel 27.2b zur Beeinflussung der Temperatur des im geschlossenen Kreislauf 22 geführten Betriebsmittels vorgesehen. Diese umfassen eine Kühleinrichtung zur direkten Kühlung des Betriebsmittels. Auch hier ist der geschlossene Kreislauf 22 Bestandteil des Betriebsmittelversorgungssystems.

Die Steuerung des Betriebsmittelvolumenstromes im geschlossenen Kreislauf 22, insbesondere im externen Teil 20.2a oder 20.2b, kann unterschiedlich erfolgen. Im einfachsten Fall erfolgt diese in Abhängigkeit der Drehzahl der rotierenden Kreislaufteile oder wird hinter dem Austritt 16 in einem Abströmraum oder einer, mit diesem gekoppelten Kammer zwischengespeichert. Um den gesamten Kreislauf 20.2a oder 20.2b selbsttätig aufrechtzuerhalten ist eine hohe Strömungsgeschwindigkeit am Austritt 16 erforderlich. Diese wird durch die Meridianströmung im torusförmigen Arbeitsraum 5 und den Austritt in den abgedichteten Teil 54 des Spaltes 13 realisiert. Dieser hohe Druck ist dabei direkt proportional zum Druck im torusförmigen Arbeitsraum 5 und kann auf sehr einfache Art und Weise am Eintritt 19 ins Gehäuse 6 bzw. in einen mit diesem gekoppelten Kanal oder Hohlraum 18 im Gehäuse 6 abgegriffen werden. Die dazu erforderlichen Einrichtungen in Form von Drucksensoren, hier beispielhaft der Drucksensor 58 in Figur 2a, können somit an einem ruhenden Element gelagert werden.

Bezüglich der Ausgestaltung des berührungsfreien Dichtungssystems 15 bestehen eine Mehrzahl von Möglichkeiten. Stellvertretend werden einige in den nachfolgenden Figuren erläutert. Das berührungsfreie Dichtungssystem 15 weist dabei in der Regel immer zwei berührungsfreie Dichtungen 31 und 32 auf, die in axialer Richtung beidseits des Spaltes 13 angeordnet sind. Beide berührungsfreie Dichtungen sind dabei vorzugsweise als Labyrinthdichtungen ausgeführt. Dabei kann die Labyrinthdichtung als einseitiges Labyrinth oder jeweils zweiseitiges Labyrinth ausgeführt sein, wobei vorzugsweise die erstere Möglichkeit verwendet wird, aufgrund der erheblich einfacheren Montage. Bei der in der Figur 1 dargestellten Ausführung sind die berührungsfreien Dichtungen 31 und 32 jeweils zwischen den Schaufelrädern 3 und 4 und der Innenwand 11 des Gehäuses 6 beidseits der Trennebene T angeordnet. Der abgedichtete Teil 54 des Spalts 13 erstreckt sich somit beidseits der Trennebene T in axialer Richtung, vorzugsweise symmetrisch. Die Ausführung gemäß Figur 2a zeigt eine Anordnung des abgedichteten Teiles 54 des Spaltes 13 mit Erstreckung in axialer Richtung von der Trennebene T über die axiale Erstreckung des Pumpenrades 3. Die Dichtung 31 zwischen Sekundärschaufelrad 4 und Gehäuse 6 ist unmittelbar im Bereich der Trennebene T angeordnet, d.h. der abgedichtete Teil 54 erstreckt sich in axialer Richtung nicht über die axiale Erstreckung des Sekundärschaufelrades 4. Demgegenüber verdeutlicht Figur 2b beispielhaft eine weitere Möglichkeit der Anordnung der beiden Dichtungen 31 und 32 des berührungsfreien Dichtungssystems und damit des abgedichteten Teils 54 des Spaltes 13 in axialer Richtung. Bei dieser Ausführung sind beide Dichtungen 31 und 32 mit unterschiedlichem Abstand zur Trennebene T angeordnet, so daß der abgedichtete Teil sich in axialer Richtung über einen Teil der axialen Erstreckung des Primärschaufelrades 3 und einen Teil der axialen Erstreckung des Sekundärschaufelrades 4 erstreckt. Die in den Figuren 1, 2a und 2b dargestellten Möglichkeiten sind beliebig untereinander austauschbar und nicht an die in den Figuren dargestellten Ausführungen der hydrodynamischen Baueinheit 1 gebunden.

Die Dichtflächen jeder berührungsfreien Dichtung können dabei von unterschiedlichen Elementen gebildet werden. Die in den nachfolgenden Figuren dargestellten Ausführungsmöglichkeiten können auch auf die Ausführungen in den Figuren 1 und 2 übertragen werden.

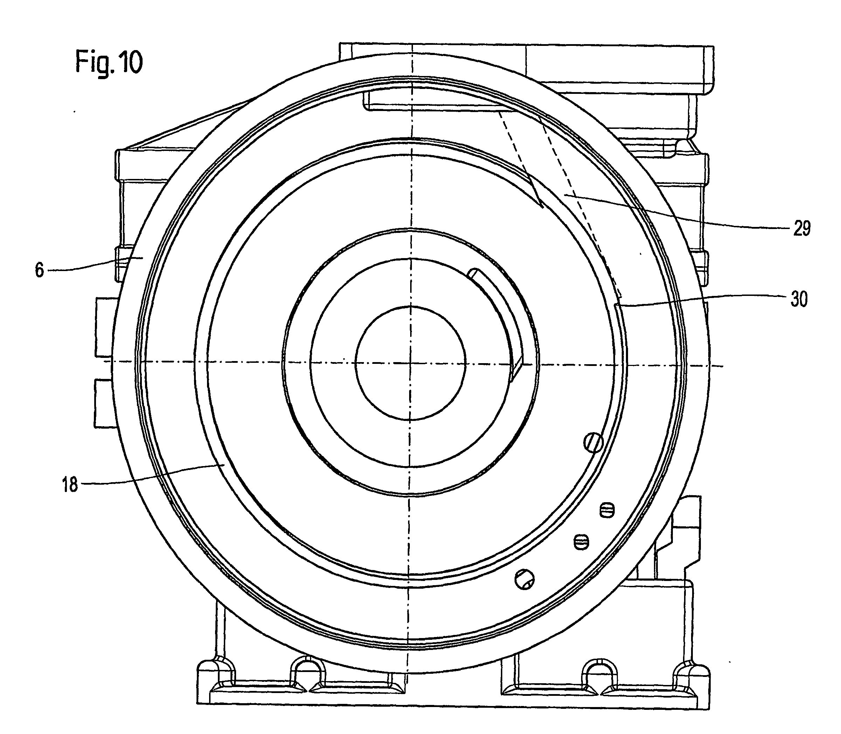

Die Kanäle oder Hohlräume 18 sind derart gestaltet, daß dieser sich in Richtung vom Eintritt 30 weg spiralförmig vergrößert. Diese Lösung wird insbesondere für Ausführungen mit teilweise außerhalb des Gehäuses 6 geführten Kreislaufteilen, wie in Figur 2b dargestellt, angewandt. Dabei ist der Eintritt 30 über den Kanal 18 mit dem Austritt 29 gekoppelt. Der zum Austritt 29 mündende Teil wird auch als Auslaßrinne bezeichnet. Diese vergrößert sich in Richtung des Austrittes 29 spiralförmig und mündet vorzugsweise in den tangential geführten Austritt 29. Der Kanal dient dabei dazu, die Strömung relativ verlustarm in Druck im Auslaß aus dem Gehäuse 6 umzuwandeln und damit den Volumenstrom zu erhöhen. Eine Schnittdarstellung für den Spiralkanal 18 im Gehäuse 6 ist in Figur 10 wiedergegeben.

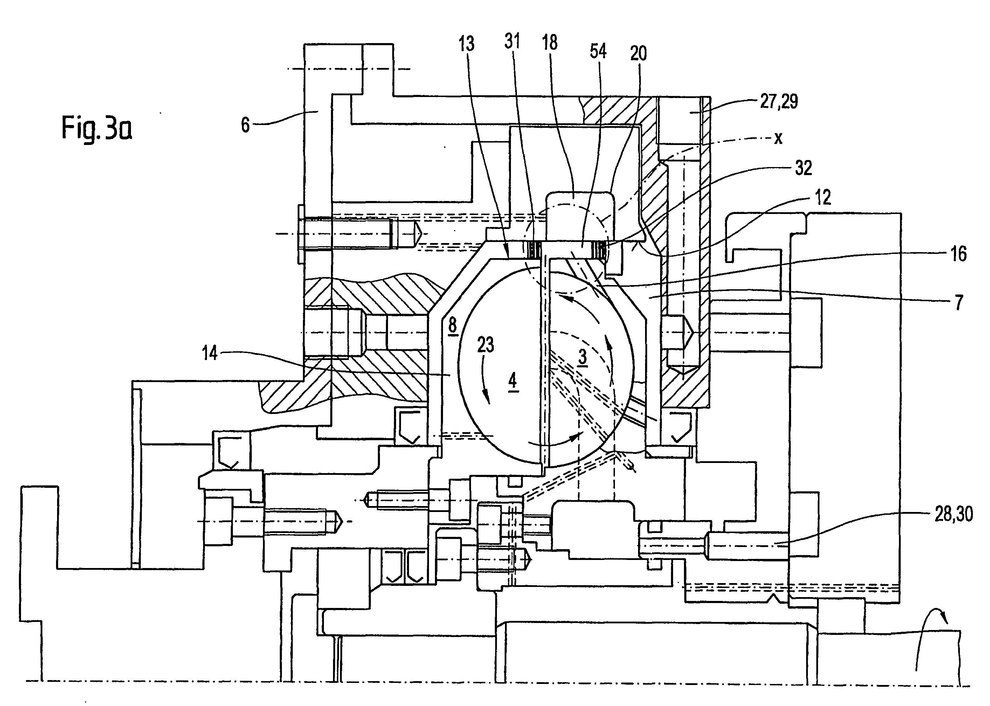

Gemäß einem Detail aus der Figur 3a werden die einzelnen Dichtflächen im Beispiel eines zweiseitigen radialen Labyrinthes jeweils am Primärschaufelrad 3 und am Sekundärschaufelrad 4 sowie der Innenwand 11, insbesondere der in radialer Richtung zu den Schaufelrädern 3 und 4 weisenden Fläche 12 des ruhenden Gehäuses 6, gebildet. Die konstruktiv detailliertere Darstellung der Ausführung gemäß Figur 3a entspricht im Grundprinzip der in der Figur 2a dargestellten, wobei jedoch die axiale Anordnung von Primärschaufelrad 3 und Sekundärschaufelrad 4 vertauscht wurden. Deutlich erkennbar sind hier der Hohlraum bzw. die Kanäle 18, der Eintritt 24 in den torusförmigen Arbeitsraum 5 und der Austritt 16 in Form eines Kanals 18. Die Anordnung der einzelnen berührungsfreien Dichtungen 31 und 32 entspricht der in der Figur 3a beschriebenen. Dabei wird eine erste Dichtungsfläche 33.31a der zwischen Sekundärschaufelrad 4 und Gehäuse 6 angeordneten Dichtung 31 vom Außenumfang am Sekundärschaufelrad 4 gebildet. Die zweite, dazu komplementäre Dichtungsfläche 33.32a der berührungsfreien Dichtung 31, wird von der Innenwand 11, insbesondere einer Teilfläche 64 der Fläche 12, am Gehäuse 6 gebildet. Die erste Dichtungsfläche 34.31a der berührungsfreien Dichtung 32 wird vom Außenumfang 9 des Primärschaufelrades gebildet, während die zweite Dichtungsfläche der Labyrinthdichtung, hier mit 34.32a bezeichnet, vom Innenumfang bzw. der Innenwand 11 des ruhenden Gehäuses 6 gebildet wird. Alle Dichtungsflächen tragen dabei Vorsprünge und Ausnehmungen, die mit denen der jeweils komplementär dazugehörenden Dichtungsfläche unter Bildung eines Labyrinthspaltes zusammenwirken. Bei der in der Figur 3a dargestellten Ausführung ist die berührungsfreie Dichtung 31 im Bereich der Trennebene T zwischen Primärschaufelrad und Sekundärschaufelrad am Sekundärschaufelrad 4 angeordnet, während die zweite berührungsfreie Dichtung 32.3a am Primärschaufelrad 3 in axialer Richtung ausgehend von der Trennebene T betrachtet hinter dem Austritt 16 am Primärschaufelrad 3 angeordnet ist. Im übrigen verdeutlicht Figur 3a eine konstruktive Ausführung einer erfindungsgemäß gestalteten hydrodynamischen Baueinheit 1 für eine Ausführung gemäß Figur 2b mit wenigstens teilweise außerhalb des Gehäuses 6 geführtem Kreislauf 20, wobei hier nur der im Gehäuse 6 geführte Teil dargestellt ist.

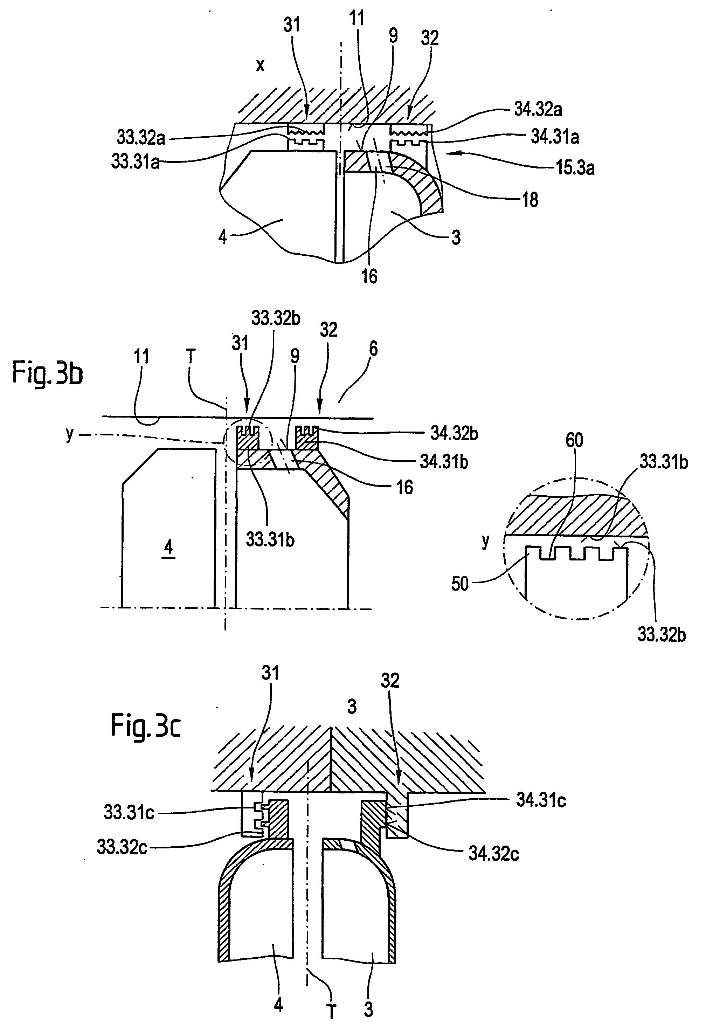

Die Figur 3b verdeutlicht anhand eines Ausschnittes entsprechend der Einzelheit X aus der hydrodynamischen Baueinheit 1 gemäß Figur 3a eine weitere Anordnungsmöglichkeit der berührungsfreien Dichtungen 31.3b und 32.3b des berührungsfreien Dichtungssystems 15.3b. Bei dieser Ausführung sind beide berührungsfreien Dichtungen 31 und 32 zwischen der Innenwand 11 des Gehäuses 6 und dem Außenumfang 9 des Primärschaufelrades 9.3b angeordnet. Die erste Dichtungsfläche 33.31b der berührungsfreien Dichtung 31 wird dabei vom Außenumfang des Primärschaufelrades 3 gebildet. Dies gilt auch für die erste Dichtungsfläche 34.31b der berührungsfreien Dichtung 32. Die jeweils dazu komplementären Dichtungsflächen 33.32b und 34.32b der ersten und zweiten berührungsfreien Dichtung 31 und 32 werden dabei von der Innenwand 11 des Gehäuses gebildet. Die beiden berührungsfreien Dichtungen 31 und 32 sind dabei beidseits des Austrittes 16 angeordnet. Die berührungsfreien Dichtungen 31 und 32 sind hier in einer bevorzugten Ausführung als einseitige axiale Labyrinthdichtung ausgeführt. Die Dichtungsflächen 33.32b und 34.32b sind eben ausgeführt und die Dichtflächen 33.31b und 34.31b sind durch alternierend angeordnete Vorsprünge und Ausnehmungen charakterisiert. Diese sind mit 59 und 60 in der Detaildarstellung Y wiedergegeben. Diese Lösung bietet den Vorteil, daß ein konventionelles Gehäuse 6 verwendet werden kann. Neben der einfacheren Fertigung ist auch die Montage sehr leicht.

Figur 3c verdeutlicht beispielhaft eine Ausführung der einzelnen berührungsfreien Dichtungen 31 und 32 des berührungsfreien Dichtungssystems 15 mit zweiseitigem radialen Labyrinth. Die Dichtflächen 33.31c, 33.32c sowie 34.31c, 34.32c erstrecken sich in radialer Richtung und weisen in axialer Richtung. Bei radialen zweiseitigen Labyrinthen muß jedoch das Gehäuse 6 zu Montagezwecken in axialer Richtung zweiteilig ausgeführt sein, wobei die Trennebene im Bereich des abgedichteten Teiles 54 des Spaltes 13 angeordnet sein muß.

Die in den Figuren 3a bis 3c beispielhaft dargestellten Ausführungen sind für jede Ausführung des erfindungsgemäßen Grundsystems einsetzbar. Die konkrete Auswahl der Ausgestaltung der einzelnen Dichtflächen und der Art der Anordnung liegt dabei im Ermessen des zuständigen Fachmannes.

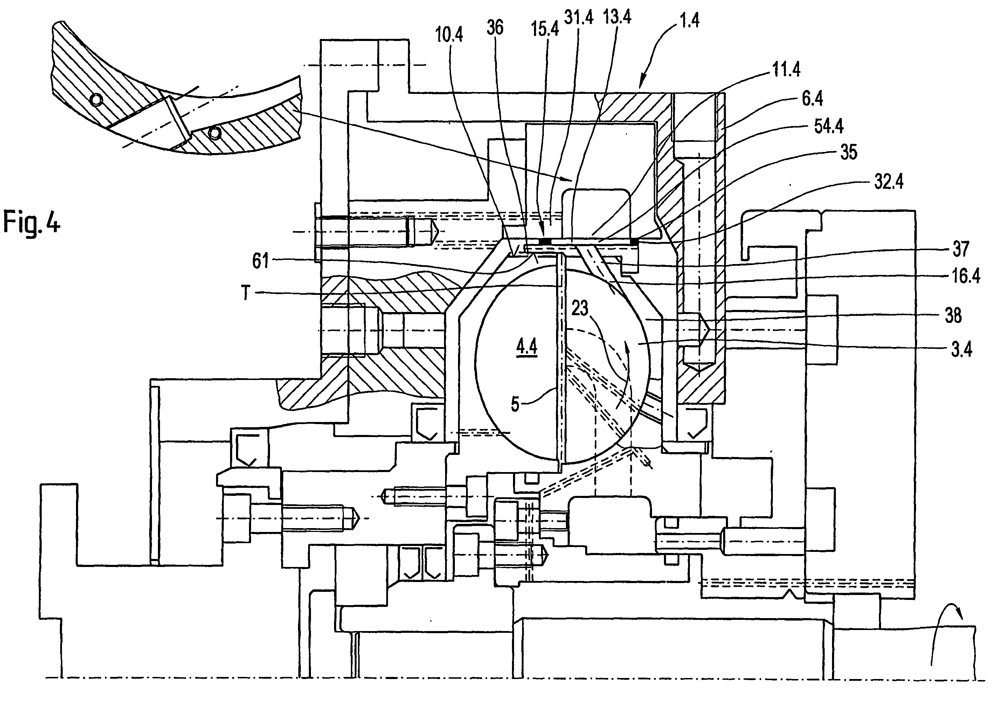

Die Figur 4 verdeutlicht eine weitere Ausgestaltung eines berührungsfreien Dichtungssystems 15.4 für eine hydrodynamische Baueinheit 1.4, welche analog zu der in Figur 3a dargestellten aufgebaut ist. Für gleiche Elemente werden daher die gleichen Bezugszeichen verwendet. Bei dieser Lösung werden die beiden berührungsfreien Dichtungen 31.4 und 32.4 an einem, drehfest mit dem Primärschaufelrad 3.4 gekoppelten Labyrinthring 35 angeordnet. Dieser kann dabei kraft-, form- oder stoffschlüssig mit dem Primärschaufelrad 3.4 verbunden sein. Der Labyrinthring 35 erstreckt sich dabei in axialer Richtung über einen Teil der axialen Erstreckung des Sekundärschaufelrades 4.4 von der Trennebene T aus betrachtet unter Bildung eines Spaltes 36 in radialer Richtung zwischen dem Außenumfang 10.4 des Sekundärschaufelrades und dem Labyrinthring 35, insbesondere einer zum Sekundärschaufelrad 4.4 weisenden Fläche 61 am Labyrinthring 35. Der Austritt 16.4 aus dem torusförmigen Arbeitsraum 5 erstreckt sich dabei durch den Labyrinthring 35 in radialer und teilweise auch axialer Richtung. Der Spalt 13.4 wird dabei zwischen dem Labyrinthring 35, d.h. wenigstens einer in radialer Richtung zur Innenwand 11.4 des Gehäuses 6.4 gerichteten Fläche 62 bzw. einer vom Sekundärschaufelrad 4 wegweisenden Fläche 62, und der Innenwand 11.4 des Gehäuses 6.4 gebildet. Die Dichtstellen sind dabei beidseits des Austrittes aus dem torusförmigen Arbeitsraum 5.4 am Labyrinthring 35 angeordnet und begrenzen den Teil 54 des Spaltes 13.4. Die Dichtungen 31.4 und 32.4 können wiederum als einseitige oder zweiseitige Labyrinthdichtung ausgeführt werden. Bezüglich der Anordnung der Dichtungen 31.4 und 32.4 bestehen ebenfalls mehrere Möglichkeiten. Bezogen auf die Anordnung von Sekundärschaufelrad 4.4 und Primärschaufelrad 3.4 in axialer Richtung können diese in axialen Ebenen, welche durch die axiale Erstreckung des Primärschaufelrades 3.4 oder die axiale Erstreckung von Primärschaufelrad 3.4 und Sekundärschaufel 4.4 gekennzeichnet sind, angeordnet werden. Entscheidend ist jedoch, daß der dadurch gebildete abgedichtete Teil 54.4 des Spaltes 13.4 mit dem Austritt 16.4 aus dem Arbeitsraum 5.4 gekoppelt ist. Im dargestellten Fall entspricht die Anordnung einer Anordnung gemäß Figur 2b.

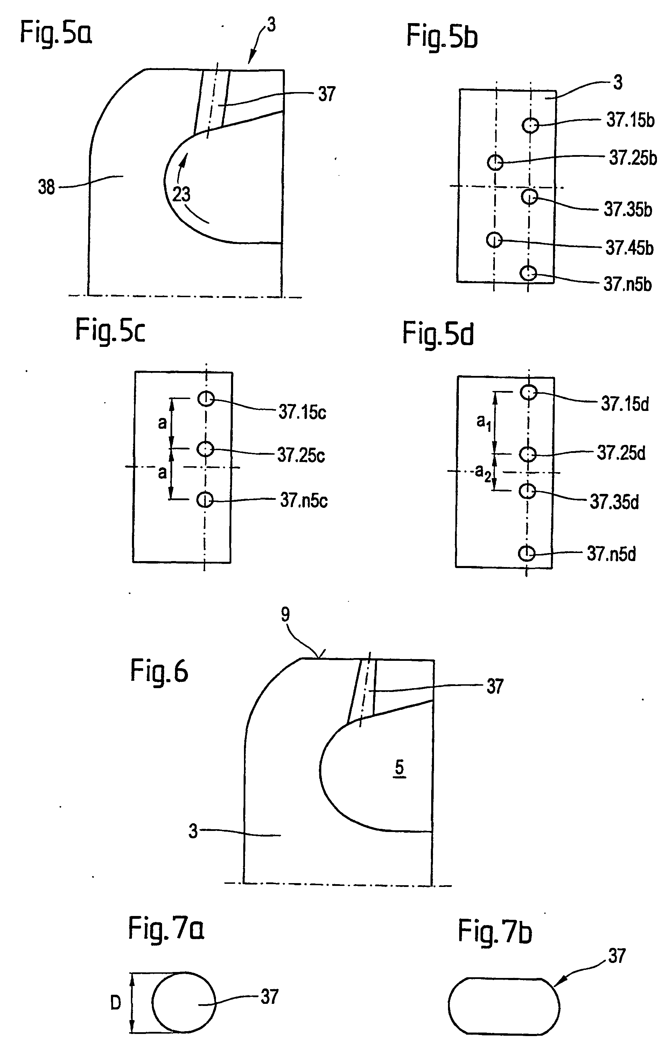

Zur Gewährleistung eines besonders hohen Druckes im Teil 54 des Spaltes 13 ist der Austritt 16 für alle bisher dargestellten Lösungen am Primärschaufelrad 3 vorgesehen und beispielsweise als Kanal 37, wie in der Figur 5a anhand einer Detaildarstellung dargestellt, ausgeführt. Der Kanal 37 verbindet dabei den torusförmigen Arbeitsraum 5 mit dem Raum außerhalb des torusförmigen Arbeitsraumes, d.h. dem Gehäuseinnenraum 14, der von der Gehäuseinnenwand 11 begrenzt wird. Der Kanal 37 erstreckt sich dabei durch die Wand 38 des Primärschaufelrades 3. Dieser ist derart gestaltet und ausgerichtet, daß wenigstens eine Richtungskomponente in Strömungsrichtung im Betriebszustand des hydrodynamischen Bauelementes 2 zwischen dem Primärschaufelrad 3 und dem Sekundärschaufelrad 4 sowie im wesentlichen tangential zu der sich im Betriebszustand einstellenden Kreislaufkontur des Strömungskreislaufes, d.h. Arbeitskreislaufes 23, im torusförmigen Arbeitsraum 5 ausgerichtet ist. Dies bedeutet, daß der Austritt aus dem torusförmigen Arbeitsraum 5 immer tangential zum sich als Arbeitskreislauf 23 einstellenden Strömungskreislauf im torusförmigen Arbeitsraum 5 erfolgt. Der Kanal 37 ist dabei Bestandteil des externen Kreislaufes 20, welcher zwischen dem Austritt 16 und dem Eintritt 24 in den Arbeitsraum 11 geschaltet ist und der Bestandteil des geschlossenen Kreislaufes 22 ist. Vorzugsweise ist der Kanal 37 derart ausgeführt, daß dieser tangential in Richtung der Kreislaufkontur, d.h. des Arbeitskreislaufes 23 im Betriebszustand und in Strömungsrichtung, ausgerichtet ist. Diese Anordnung ermöglicht es, eine Abfuhr von Betriebsmittel aus dem Arbeitsraum 5 mit geringst möglichen Widerstand und Strömungsgeschwindigkeitsverlusten zu gewährleisten. Vorzugsweise sind des weiteren eine Mehrzahl von Kanälen 37 am Primärschaufelrad 3 vorgesehen. Diese können dabei entweder auf einer gemeinsam gedachten theoretischen Umfangslinie oder aber auf mehreren verschiedenen Umfangslinien am Primärschaufelrad 3 angeordnet sein. Unter Umfangslinien werden dabei theoretisch gedachte Linien am Außenumfang des Primärschaufelrades 3 verstanden, welche parallel zur gedachten Mittelebene bzw. Trennebene T zwischen dem Primärschaufelrad 3 und dem Sekundärscliaufelrad 4 im eingebauten Zustand des hydrodynamischen Bauelementes 2 verlaufen. Es besteht dabei die Möglichkeit, die Anordnung wechselweise auf unterschiedlichen Umfangslinien vorzunehmen. Eine Möglichkeit dieser Anordnung ist in schematisch vereinfachter Darstellung in der Figur 5b in einer Ansicht von oben auf ein Primärschaufelrad 3 wiedergegeben. Das Primärschaufelrad ist mit 3 bezeichnet, die Kanäle mit 37.15b bis 37.n5b. Eine Anordnung einer Vielzahl von Kanälen 37.15c bis 37.n5c auf einer Umfangslinie ist in einer Ansicht von oben auf ein Primärschaufelrad 3 in Figur 5c wiedergegeben. Die einzelnen Kanäle 37.15c bis 37.n5c zwischen dem torusförmigen Arbeitsraum 5 und dem Gehäuseinnenraum 14 sind dabei auf einer Umfangslinie in konstanten Abständen a oder gemäß Figur 5d mit unterschiedlichen Abständen zwischen zwei in Umfangsrichtung einander benachbarten Kanälen 37.15d bis 37.n5d ausgeführt. Diese Abstände sind dabei mit a1 und a2 bezeichnet.

Die Figuren 5a bis 5d verdeutlichten Ausführungen mit konstantem Querschnitt des Kanals 37 bzw. der Kanäle 37.1 bis 37.n, 37.15c bis 37.n5c und 37.15d bis 37.n5d, in Strömungsrichtung vom torusförmigen Arbeitsraum 5 zum abgedichteten Teil 54 des Spaltes 13 betrachtet. Zur Erhöhung der Strömungsgeschwindigkeit besteht zusätzlich auch die Möglichkeit gemäß einer Ausführung in Figur 6 diese Kanäle 37 mit Querschnittsveränderung zwischen dem torusförmigen Arbeitsraum 5 und dem Außenumfang 9 am Primärschaufelrad 3 bzw. dem mit diesem drehfest gekoppelten Labyrinthring 35 vorzunehmen. Eine Möglichkeit mit konstanter allmählicher Querschnittsverringerung vom Innenumfang zum Außenumfang 9 des Primärschaufelrades 3 bzw. dem Labyrinthring 35 ist in Figur 6 dargestellt. Der Kanal 37 verengt sich dabei stetig zum Außenumfang 9 hin.

Bezüglich der konkreten Ausgestaltung des Kanals hinsichtlich seiner Querschnittsform bestehen ebenfalls eine Vielzahl von Möglichkeiten. Diese sind in den Figuren 7a und 7b beispielhaft wiedergegeben. Dabei verdeutlicht die Figur 7a die Ausgestaltung des Kanals 37 mit kreisrundem Querschnitt und die Figur 7b mit einem ovalen Querschnitt.

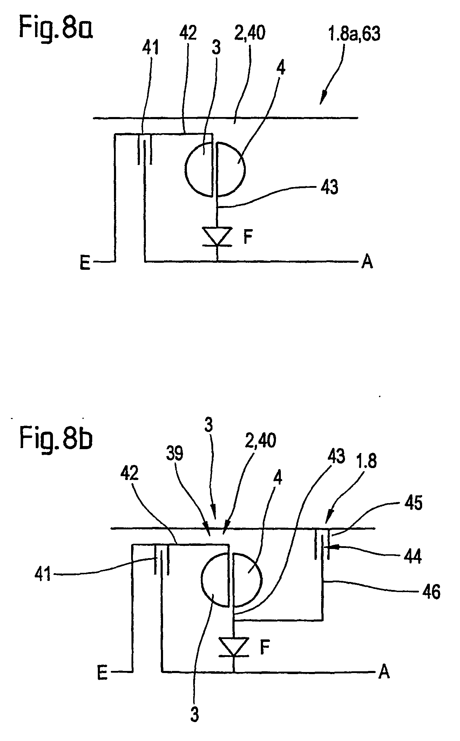

Die Figur 8b verdeutlicht in schematisch stark vereinfachter Darstellung eine Ausführung und Anwendung der erfindungsgemäßen hydrodynamischen Baueinheit 1, bei welcher das hydrodynamische Bauelement 2 neben seiner Funktion als hydrodynamische Kupplung auch als auch hydrodynamische Bremse fungieren kann. Die hydrodynamische Baueinheit ist daher mit 1.8a bezeichnet. Bezüglich des Grundaufbaus kann auf die vorangegangenen Figuren verwiesen werden. Vorzugsweise ist dazu die hydrodynamische Baueinheit 1.8 als kombinierte Anfahr- und Bremseinheit 39 ausgeführt, wie in Figur 8b dargestellt. Die Figur 8a zeigt demgegenüber nur eine Ausführung der Baueinheit 1.8a als Anfahreinheit 63 mit zusätzlicher Möglichkeit der lastfreien Schaltung und damit der Möglichkeit des Einsatzes in automatisierten Schaltgetrieben. Das hydrodynamische Bauelement 2 bildet dabei bei beiden das Anfahrelement 40. Zusätzlich kann eine Überbrückungskupplung 41 mit in der kombinierten Anfahr- und Bremseinheit 39 gemäß Figur 8b oder der Anfahreinheit 63 gemäß Figur 8a integriert sein, vorzugsweise wird diese jedoch separat ausgeführt. Der Eingang E der hydrodynamischen Baueinheit 1.8, welcher entweder direkt den Eingang E der kombinierten Anfahr- und Bremseinheit 39 oder der Anfahreinheit 63 bildet oder mit diesem gekoppelt ist, beispielsweise über die zu dieser gehörenden Überbrückungskupplung 41, ist mit einer, hier nicht dargestellten, Antriebsmaschine wenigstens mittelbar verbunden. Der Ausgang A der hydrodynamischen Baueinheit 1.8a bzw. 1.8b bildet in der Regel auch den Ausgang der kombinierten Anfahr- und/oder Bremseinheit 39 bzw. der Anfahreinheit 63. Die Bezeichnungen Eingang E und Ausgang A beziehen sich dabei immer auf die Kraftflußrichtung im Traktionsbetrieb von der Antriebsmaschine zum Abtrieb betrachtet. Die Eingänge E und Ausgänge A können dabei in Form von Voll- oder Hohlwellen oder flanschartiger Elemente oder Flexplates ausgeführt sein, die jeweils mit den entsprechenden Anschlußelementen - Antriebsmaschine oder Schaltstufe - in bekannter Weise koppelbar sind. In dieser Kraftflußrichtung betrachtet umfaßt das hydrodynamische Bauelement 2 bei Funktion als hydrodynamische Kupplung ebenfalls einen Antrieb 42 und einen Abtrieb 43. Der Antrieb 42 wird dabei vom Primärschaufelrad 3 und der Abtrieb vom Sekundärschaufelrad 4 gebildet. Zur Realisierung positiver Effekte sind jedoch zwischen dem Sekundärschaufelrad 4 bzw. dem Abtrieb 43 der hydrodynamischen Kupplung und dem Ausgang A ein Freilauf F vorgesehen. Durch den Freilauf F ist es möglich, während des Gangstufenwechsels einen übermäßigen Verschleiß in den Synchronisiereinrichtungen zu verhindern und somit den Komfort zu erhöhen. Derartige Anfahreinheiten sind in der Regel in einem Antriebsstrang mit einem Drehzahl-/Drehmomentwandler, d.h. Getriebe, gekoppelt bzw. bilden mit entsprechenden Schaltstufen eine Getriebebaueinheit. Das Gesamtgetriebe besteht dann aus der Anfahreinheit und den nachgeordneten Drehzahl-/Drehmomentumformungseinheiten. Dieses weist dabei als Eingang den Eingang E der Anfahreinheit 39 auf. Um einen Gangstufenwechsel in einer Schaltgetriebebaueinheit vornehmen zu können, muß die Getriebeeingangswelle, welche von dem Eingang E der Anfahreinheit gebildet wird, momentenfrei sein und von zusätzlichen Maßen entkoppelt werden. Andernfalls bestünde die Gefahr, daß die Synchronelemente und/oder Klauen der Schaltelemente, insbesondere der der Anfahreinheit 39 nachgeordneten Übersetzungsstufen, den Gangstufenwechsel nicht bewältigen können oder erheblich belastet werden und verschleißen. Dabei wird zur Vornahme eines Gangstufenwechsels sowohl die Antriebsmaschine als auch das Sekundärschaufelrad 4.8a bzw. 4.8b von der Eingangswelle E abgekoppelt. Der Freilauf F kann zusätzlich unter Ausnutzung einer zusätzlichen Bremseinrichtung 44 gemäß Figur 8b zur Feststellung des Sekundärschaufelrades 4 genutzt werden. Diese zusätzliche Bremseinrichtung 44 ist vorzugsweise als Scheibenbremseinrichtung in Lamellenbauart ausgeführt und mit dem Abtrieb 43 des hydrodynamischen Bauelementes 2 vor dem Freilauf F gekoppelt. Die Bremseinrichtung 44 umfaßt dazu mindestens eine erste ortsfeste Scheibe 45, welche vorzugsweise am Gehäuse 6 angeordnet ist, und ein zweites Scheibenelement 46, welches wenigstens mittelbar, d.h. direkt oder über weitere zwischengeschaltete Scheibenelemente mit der ortsfesten Scheibe 45 in Wirkverbindung bringbar ist. Das zweite Scheibenelement 46 ist dabei drehfest mit dem Abtrieb 43, insbesondere dem Sekundärschaufelrad 4.8b, gekoppelt Mit dem hydrodynamischen Bauelement 2 können somit wenigstens zwei Betriebszustände - ein erster Betriebszustand zur Leistungsübertragung, welcher insbesondere während des Anfahrvorganges beim Einsatz in Getrieben von Fahrzeugen in Frage kommt und die Funktion einer hydrodynamischen Kupplung beschreibt und ein zweiter Betriebszustand zur Abbremsung, d.h. die Funktion als Retarder - realisiert werden. Zur Realisierung der Funktion des hydrodynamischen Bauelementes 2 als hydrodynamischer Retarder erfolgt die Zuordnung der Funktion des Statorschaufelrades durch Festsetzung gegenüber den ruhenden Getriebeteilen, insbesondere dem Gehäuse 6 zum Sekundärschaufelrad 4, d.h. zu dem bei Funktion als hydrodynamische Kupplung fungierenden Turbinenrad. Die Funktion des Rotorschaufelrades wird dabei vom Primärschaufelrad 3, welches bei Funktionsweise als hydrodynamische Kupplung auch als Pumpenrad fungiert, übemommen.

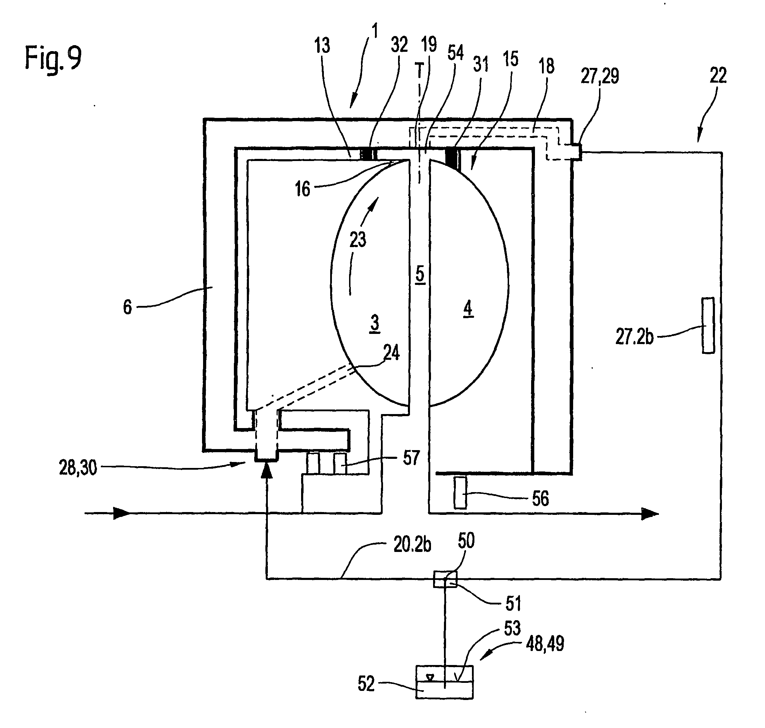

Die Figur 9 verdeutlicht anhand einer Ausgestaltung gemäß Figur 2b ein System zur Steuerung des Füllungsgrades. Für gleiche Elemente werden daher die gleichen Bezugszeichen verwendet. Das Betriebsmittel tritt dabei mit entsprechend hohem Druck aus dem torusförmigen Arbeitsraum 5 über den Kanal 37 in den Gehäuseinnenraum 14, insbesondere den Spalt 13, aus. Aufgrund der sehr hohen Druckdifferenz zwischen dem Austritt 16 aus dem torusförmigen Arbeitsraum 5 und dem Eintritt 24 können diese zur Aufrechterhaltung eines Kühlvolumenstromes während des Betriebes des hydrodynamischen Bauelementes genutzt werden. Zur Beeinflussung der Funktionen Verlust-Betriebsmittelnachführung und der Beeinflussung des Füllungsgrades im torusförmigen Arbeitsraum 5 des hydrodynamischen Bauelementes 2 sind Mittel 48 zur Befüllung und Mittel 49 zur Druckbeaufschlagung dem externen Kreislauf 20 zugeordnet. Diese Mittel 48 und 49 sind über eine Knotenstelle 50 an den geschlossenen Kreislauf 20 anbindbar. Die Knotenstelle 50 wird dabei im einfachsten Fall von einem Ventilsystem 51 gebildet, welches eine vollständige Entkopplung der Mittel zur Befüllung 48 und der Mittel 49 zur Druckbeaufschlagung ermöglicht und in einer anderen Schaltstellung eine Ankopplung erlaubt. Die Ausgestaltung der Mittel zur Befüllung 48 und der Mittel zur Druckvorgabe 49 kann vielgestaltig erfolgen, vorzugsweise werden diese Mittel zur Befüllung 48 und die Mittel zur Druckvorgabe 49 von einem gemeinsamen Element oder System gebildet bzw. unter Ausnutzung gleicher Elemente. Dabei kann es sich beispielsweise um einen Betriebsmittelversorgungstank 52 handeln, welcher indirekt über eine zusätzliche Energiequelle, beispielsweise eine hydrostatische Pumpe oder eine andere Einrichtung mit dem geschlossenen Kreislauf 20 über die Knotenstelle 50 in Verbindung steht. Dabei erfolgt aus dem externen Betriebsmittelversorgungstank 52 eine Verlust-Betriebsmittelnachfüllung. Des weiteren kann bei vollständig druckdichter Ausführung bzw. Anbindung des Betriebsmittelversorgungstankes 52 an die Knotenstelle 50 ein statischer Überlagerungsdruck im geschlossenen Kreislauf 20 erzeugt werden, wobei dieser Druck entweder durch eine entsprechende Pumpeinrichtung oder beispielsweise Luft auf den Betriebsmittelspiegel im externen Betriebsmittelversorgungstank 52 erzeugt wird. Der Betriebsmittelspiegel ist dabei mit 53 bezeichnet.

### Bezugszeichenliste

- 1, 1.2a, 1.2b 1.4, 1.8: hydrodynamische Baueinheit
- 2: hydrodynamisches Bauelement
- 3: Primärschaufelrad
- 4: Sekundärschaufelrad
- 5: torusförmiger Arbeitsraum
- 6: ruhendes Gehäuse
- 7: Schaufelradnebenraum
- 8: Schaufelradnebenraum
- 9: Außenumfang des Primärschaufelrades
- 10: Außenumfang des Sekundärschaufelrades
- 11: Wand
- 12: Fläche
- 13: Spalt
- 14: Gehäuseinnenraum
- 15: berührungsfreies Dichtungssystem
- 16: Austritt
- 17: Innenwand
- 18: Kanäle
- 19: Eintritt in das Gehäuse
- 20: externer Kreislauf
- 21: Betriebsmittelversorgungssystem
- 22: geschlossener Kreislauf
- 23: Arbeitskreislauf
- 24: Eintritt in den torusförmigen Arbeitsraum
- 25: Kühleinrichtung
- 26: Kanal
- 27: Anschluß
- 28: Anschluß
- 29: Austritt aus dem Gehäuse
- 30: Eintritt in das Gehäuse
- 31: berührungsfreie Dichtung
- 32: berührungsfreie Dichtung
- 33.31a, 33.31b: erste Dichtungsfläche
- 33.32a, 33.32b: zweite Dichtungsfläche
- 34: Teilfläche
- 34.31a, 34.31b: erste Dichtungsfläche
- 34.32a, 34.32b: zweite Dichtungsfläche
- 35: Labyrinthring
- 36: Spalt
- 37: Kanal
- 38: Wand
- 39: kombinierte Anfahr- und Bremseinrichtung
- 40: Anfahrelement
- 41: Überbrückungskupplung
- 42: Antrieb
- 43: Abtrieb
- 44: Bremseinrichtung
- 45: ortsfeste Scheibe
- 46: zweites Scheibenelement
- F: Freilauf
- E: Eingang
- A: Ausgang
- 48: Mittel zur Befüllung
- 49: Mittel zur Druckbeaufschlagung
- 50: Knotenstelle
- 51: Ventilsystem
- 52: Betriebsmittelversorgungstank
- 53: Betriebsmittelspiegel
- 54: abgedichteter Teil
- 55: Dichtung
- 56: Dichtung
- 57: Dichtung
- 58: Drucksensor
- 59: Vorsprünge
- 60: Ausnehmungen
- 61: zum Sekundärschaufelrad weisende Fläche am Labyrinthring
- 62: in radialer Richtung zur Innenwand des Gehäuses 6 gerichtete Fläche am Labyrinthring
- 63: Anfahreinheit
- 64: Teilfläche

## Patentansprüche

1. Hydrodynamische Baueinheit (1; 1.4; 1.8a; 1.8b)
mit einem Eingang (E) und einem Ausgang (A) und einem dazwischen angeordneten hydrodynamischen Bauelement (2; 2.4), umfassend ein mit dem Eingang (E) drehfest verbindbares Primärschaufelrad (3; 3.4) und ein mit dem Ausgang (A) drehfest verbindbares Sekundärschaufelrad (4; 4.4), die einen Arbeitsraum (5; 5.4) bilden;
das hydrodynamische Bauelement (2; 2.4) ist frei von einem Leitrad;
mit einem, das Primärschaufelrad (3; 3.3a; 3.3b; 3.4; 3.5b; 3.5d; 3.5c; 3.8a; 3.8b) und das Sekundärschaufelrad (4; 4.3a; 4:3b; 4.4; 4.5b; 4.5d; 4.5c; 4.8a; 4.8b) umschließenden ruhenden Gehäuse (6);
das hydrodynamische Bauelement (2; 24) ist frei von einer mit dem Primärschaufelrad (3; 3.4) drehfest gekoppelten und das Sekundärschaufetrad (4; 4.4) in axialer und in Umfangsrichtung umschließenden Primärschaufelradschale;
die Innenwand (11) des ruhenden Gehäuses (6) und wenigstens ein Teil der Außenumfänge von Primärschaufelrad (3; 3.4) und
Sekundärschaufelrad (4; 4.4) begrenzen in axialer Richtung jeweils einen Schaufelradnebenraum (7, 8);
zwischen dem Primärschaufelrad (3; 3.4) und dem Sekundärschaufelrad (4; 4.4) und einem in radialer Richtung zu den Schaufelrädern hin weisenden Teil der Innenwand (11) des Gehäuses (6) ist in radialer Richtung ein Spalt (13) vorgesehen;
**gekennzeichnet durch** die folgenden Merkmale:
wenigstens ein Teil (54) des Spaltes (13) ist mittels eines berührungsfreien Dichtsystems (15; 15.4) gegenüber den Schaufelradnebenräumen (7, 8) abgedichtet;
mit mindestens einem, an einem Schaufetrad (3, 4; 3.4, 4.4) oder zwischen diesen angeordneten Austritt (16) aus dem Arbeitsraum (5);
der Austritt (16) mündet in den mittels des berührungsfreien Dichtungssystems (15; 15.4) gegenüber den Schaufelradnebenräumen (7, 8) abgedichteten Teil (54) des Spaltes (13),
der Arbeitskreislauf (23) ist Bestandteil eines geschlossenen Kreislaufes (22), umfassend einen externen Kreislaufteil, welcher außerhalb des torusförmigen Arbeitsraumes (5) geführt wird, welcher mit dem Austritt (16) aus dem Arbeitsraum (5) und einem Eintritt in den Arbeitsraum (5) gekoppelt ist; der externe Teil (20.2a) oder der im Gehäuse (6) geführte Teil des externen Teiles (20.2b) wird in einem spiralförmigen Kanal im Gehäuse (6) geführt.

2. Hydrodynamische Baueinheit (1; 1.4; 1.8a; 1.8b) nach Anspruch 1, **dadurch gekennzeichnet, daß** das berührungsfreie Dichtsystem (15; 15.4) wenigstens zwei sich in Umfangsrichtung erstreckende berührungsfreie Dichtungen (31, 32; 31.4, 32.4) umfaßt.

3. Hydrodynamische Baueinheit (1; 1.4; 1.8a; 1.8b) nach Anspruch 1 oder 2, **dadurch gekennzeichnet, daß** die berührungsfreie Dichtung (31, 32; 31.4; 32.4) als Labyrinthdichtung ausgeführt ist.

4. Hydrodynamische Baueinheit (1; 1.4; 1.8a; 1.8b) nach Anspruch 3, **dadurch gekennzeichnet, daß** die berührungsfreie Dichtung (31, 32; 31.4; 32.4) als einseitige Labyrinthdichtung ausgeführt ist.

5. Hydrodynamische Baueinheit (1; 1.4; 1.8a; 1.8b) nach Anspruch 3, **dadurch gekennzeichnet, daß** die berührungsfreie Dichtung (31, 32; 31.4; 32.4) als zweiseitige Labyrinthdichtung ausgeführt ist.

6. Hydrodynamische Baueinheit (1; 1.4; 1.8a; 1.8b) nach Anspruch 4 oder 5, **dadurch gekennzeichnet, daß** die berührungsfreie Dichtung (31, 32; 31.4; 32.4) als axiale Labyrinthdichtung ausgeführt ist.

7. Hydrodynamische Baueinheit (1; 1.4; 1.8a; 1.8b) nach Anspruch 4 oder 5, **dadurch gekennzeichnet, daß** die berührungsfreie Dichtung (31, 32; 31.4; 32.4) als radiale Labyrinthdichtung ausgeführt ist

8. Hydrodynamische Baueinheit (1; 1.4; 1.8a; 1.8b) nach einem der Ansprüche 1 bis 7, **dadurch gekennzeichnet, daß** der abgedichtete Teil (54) des Spaltes (13) sich in axialer Richtung beidseits der Trennebene (T) zwischen Primärschaufelrad (3) und Sekundärschaufelrad (4) über wenigstens einen Teil der axialen Erstreckung der jeweiligen Schaufelräder (3, 4) erstreckt.

9. Hydrodynamische Baueinheit (1; 1.4; 1.8a; 1.8b) nach Anspruch 8, **dadurch gekennzeichnet, daß** der abgedichtete Teil (54) des Spaltes (13) sich in axialer Richtung beidseits der Trennebene (T) zwischen Primärschaufelrad (3) und Sekundärschaufelrad (4) symmetrisch über einen Teil der axialen Erstreckung der jeweiligen Schaufelräder (3, 4) erstreckt.

10. Hydrodynamische Baueinheit (1; 1.4; 1.8a; 1.8b) nach einem der Ansprüche 1 bis 7, **dadurch gekennzeichnet, daß** der abgedichtete Teil (54) des Spaltes (13) ausgehend von der Trennebene (T) sich über wenigstens einen Teil der axialen Erstreckung des Primärschaufelrades (3) erstreckt.

11. Hydrodynamische Baueinheit (1; 1.4; 1.8a; 1.8b) nach einem der Ansprüche 1 bis 10, **dadurch gekennzeichnet, daß** die Dichtflächen (33.31a, 33.32a, 34.31a, 34.32a; 33.31b, 33.32b, 34.31b, 34.32b; 33.31c, 33.32c, 34.31c, 34.32c) der berührungsfreien Dichtungen (31, 32) zwischen dem Außenumfang (10) des Sekundärschaufelrades (4) und/oder der Innenwand (11) des Gehäuses (6) und dem Außenumfang (9) des Primärschaufelrades (3) und dem Gehäuse (6) ausgeführt sind.

12. Hydrodynamische Baueinheit (1; 1.4; 1.8a; 1.8b) nach Anspruch 11, **dadurch gekennzeichnet, daß** die Dichtfläche am Sekundärschaufelrad (4) im Bereich der Trennebene (T) zwischen Primärschaufelrad (3) und Sekundärschaufelrad (4) angeordnet ist.

13. Hydrodynamische Baueinheit (1; 1.4; 1.8a; 1.8b) nach einem der Ansprüche 11 oder 12, **dadurch gekennzeichnet, daß** die Dichtfläche am Primärschaufelrad (3) in axialer Richtung von der Trennebene (T) zwischen Primärschaufelrad (3) und Sekundärschaufelrad (4) aus betrachtet hinter dem oder den Austritten (16) aus dem Primärschaufelrad (3) angeordnet.

14. Hydrodynamische Baueinheit (1; 1.4; 1.8a; 1.8b) nach Anspruch 11, **gekennzeichnet durch** die folgenden Merkmale:
die beiden berührungsfreien Dichtungen sind wenigstens mittelbar zwischen Primärschaufelrad (3) und Gehäuse (6) angeordnet;
die beiden Dichtungen sind beidseitig des Austrittes (16) aus dem Arbeitsraum (5) am Primärschaufelrad (3) angeordnet.

15. Hydrodynamische Baueinheit (1; 1.4; 1.8a; 1.8b) nach Anspruch 14, **dadurch gekennzeichnet, daß** die erste Dichtfläche am Außenumfang (9) des Primärschaufelrades (3) im Bereich der Trennebene (T) und die zweite Dichtfläche von der Trennebene (T) aus betrachtet hinter dem Austritt (16) aus dem Arbeitsraum (5) am Außenumfang (9) des Primärschaufelrades (3) angeordnet ist.

16. Hydrodynamische Baueinheit (1; 1.4; 1.8a; 1.8b) nach Anspruch 14 oder 15, **dadurch gekennzeichnet, daß** mit dem Primärschaufelrad (3) ein dichtflächentragendes Element (35) drehfest verbunden ist, welches sich in axialer Richtung überwenigstens einen Teil der Abmessungen des Sekundärschaufelrades (4) erstreckt und mit dem Außenumfang (10) des Sekundärschaufelrades (4) eine Spaltdichtung bildet.

17. Hydrodynamische Baueinheit (1; 1.4; 1.8a; 1.8b) nach einem der Ansprüche 1 bis 16, **gekennzeichnet durch** die folgenden Merkmale:
der Austritt (16) aus dem torusförmigen Arbeitsraum (5) wird von einem im Primärschaufelrad (3) angeordneten Kanal (37) gebildet;
der Kanal (37) ist derart gestaltet und ausgerichtet, daß wenigstens eine Richtungskomponente im Betriebszustand des hydrodynamischen Bauelementes (2) in Strömungsrichtung des zwischen Primärschaufelrad (3) und dem Sekundärschaufelrad (4) sich einstellenden Arbeitskreislaufes sowie im wesentlichen tangential zu der sich im Betriebszustand einstellenden Kreislaufkontur des Arbeitskreislaufes (23) zwischen dem Primärschaufelrad (3) und dem Sekundärschaufelrad (4) ausgerichtet ist.

18. Hydrodynamische Baueinheit (1; 1.4; 1.8a; 1.8b) nach Anspruch 17, **dadurch gekennzeichnet, daß** der Kanal (37) zur Verbindung von torusförmigem Arbeitsraum (5) und dem abgedichteten Teil (54) des Spaltes (13) tangential in Richtung zur Kreislaufkontur des sich zwischen Primärschaufelrad (3) und Sekundärschaufelrad (4) im Betriebszustand einstellenden Arbeitskreislaufes (23) ausgerichtet ist.

19. Hydrodynamische Baueinheit (1; 1.4; 1.8a; 1.8b) nach einem der Ansprüche 17 oder 18, **dadurch gekennzeichnet, daß** der Kanal (37) einen geradlinigen Verlauf frei von Richtungsänderungen aufweist.

20. Hydrodynamische Baueinheit (1; 1.4; 1.8a; 1.8b) nach einem der Ansprüche 17 bis 19, **dadurch gekennzeichnet, daß** eine Vielzahl von Austritten (16) und damit Kanälen (37.1 bis 37.n) vorgesehen ist.

21. Hydrodynamische Baueinheit (1; 1.4; 1.8a; 1.8b) nach Anspruch 20, **dadurch gekennzeichnet, daß** die Kanäle (37.1 bis 37.n) auf einer theoretisch gedachten Umfangslinie des Primärschaufelrades (3), welche parallel zur Trennebene (T) zwischen Primärschaufelrad (3) und Sekundärschaufelrad (4) verläuft, angeordnet sind.

22. Hydrodynamische Baueinheit (1; 1.4; 1.8a; 1.8b) nach Anspruch 19, **dadurch gekennzeichnet, daß** die Kanäle (37.1 bis 37.n) auf mehreren theoretisch gedachten Umfangslinien am Außenumfang (9) des Primärschaufelrades (3), welche parallel zur Trennebene (T) zwischen dem Primärschaufelrad (3) und dem Sekundärschaufelrad (4) im Einbauzustand verlaufen, angeordnet sind.

23. Hydrodynamische Baueinheit (1; 1.4; 1.8a; 1.8b) nach Anspruch 21 oder 22, **dadurch gekennzeichnet, daß** der Abstand (a) zwischen jeweils zwei einander in Umfangsrichtung benachbart angeordneter Kanäle (37.1 bis 37.n) konstant ist.

24. Hydrodynamische Baueinheit (1; 1.4; 1.8a; 1.8b) nach einem der Ansprüche 17 bis 23, **dadurch gekennzeichnet, daß** der Querschnitt des Kanales (37; 37.1 bis 37.n) über seine Erstreckung vom Innenumfang des Primärschaufelrades (3) bis zum Außenumfang (9) konstant ausgeführt ist.

25. Hydrodynamische Baueinheit (1; 1.4; 1.8a; 1.8b) nach einem der Ansprüche 17 bis 23, **dadurch gekennzeichnet, daß** der Kanal (37; 37.1 bis 37.n) wenigstens eine Querschnittsänderung über seine Erstreckung vom Innenumfang des Primärschaufelrades (3) bis zum Außenumfang (9) aufweist.

26. Hydrodynamische Baueinheit (1; 1.4; 1.8a; 1.8b) nach Anspruch 25, **dadurch gekennzeichnet, daß** der Kanal (37; 37.1 bis 37.n) in Richtung des Außenumfanges (9) des Primärschaufelrades (3) verengend ausgeführt ist.

27. Hydrodynamische Baueinheit (1; 1.4; 1.8a; 1.8b) nach einem der Ansprüche 17 bis 26, **dadurch gekennzeichnet, daß** der Querschnitt des Kanals (37; 37.1 bis 37.n) kreisförmig ausgeführt ist.

28. Hydrodynamische Baueinheit (1; 1.4; 1.8a; 1.8b) nach einem der Ansprüche 17 bis 26, **dadurch gekennzeichnet, daß** der Querschnitt des Kanals (37; 37.1 bis 37.n) oval ausgeführt ist.

29. Hydrodynamische Baueinheit (1) nach einem der Ansprüche 1 bis 28, **dadurch gekennzeichnet, daß** der Spalt (46) mit wenigstens einem Hohlraum oder Kanal (18) über wenigstens einem Eintritt in das Gehäuse (5) gekoppelt ist.

30. Hydrodynamische Baueinheit (1) nach einem der Ansprüch 1 bis 29, **dadurch gekennzeichnet, daß** der externe Teil (20.2a) vollständig im ruhenden Gehäuse (6) geführt ist.

31. Hydrodynamische Baueinheit (1) nach einem der Ansprüche 1 bis 29, **dadurch gekennzeichnet, daß** der externe Teil (20.2b) nur teilweise im ruhenden Gehäuse (6) geführt ist und das Gehäuse (6) Anschlüsse (27, 28) zur Kopplung mit dem außerhalb des Gehäuses (6) geführten externen Teiles (20.2b) des Kreislaufes (22) aufweist.

32. Hydrodynamische Baueinheit (1) nach Anspruch 31, **dadurch gekennzeichnet, daß** der nicht im Gehäuse (6) geführte Teil des externen Teiles (20.2b) an einen Austritt (27) aus dem Gehäuse (6) gekoppelt ist.

33. Hydrodynamische Baueinheit (1) nach einem der Ansprüche 8 bis 32, **dadurch gekennzeichnet, daß** der spiralförmige Kanal sich in. Richtung des Ausganges (27) am Gehäuse (6) hin vergrößert.

34. Hydrodynamische Baueinheit (1; 1.4; 1.8a; 1.8b) nach einem der Ansprüche 29 bis 33, **dadurch gekennzeichnet, daß** im geschlossenen Kreislauf (22) Mittel zur Beeinflussung der Temperatur des Betriebsmittels vorgesehen sind.

35. Hydrodynamische Baueinheit (1; 1.4; 1.8a; 1.8b) nach einem der Ansprüche 29 bis 34, **dadurch gekennzeichnet, daß** im Kreislauf Mittel zur Beeinflussung der Durchflußmenge angeordnet sind.

36. Hydrodynamische Baueinheit (1; 1.4; 1.8a; 1.8b) nach einem der Ansprüche 29 bis 35, **dadurch gekennzeichnet, daß** im ruhenden Gehäuse (6) unmittelbar hinter dem Spalt (13) Mittel (63) zur Erfassung des Druckes angeordnet sind.

37. Hydrodynamische Baueinheit (1; 1.4; 1.8a; 1.8b) nach einem der Ansprüche 1 bis 36, **dadurch gekennzeichnet, daß** das hydrodynamische Bauelement (2) als hydrodynamische Kupplung ausgebildet ist und Primärschaufelrad (3) und Sekundärschaufelrad (4) auf rotierbaren Wellen gelagert sind.

38. Hydrodynamische Baueinheit (1; 1.4; 1.8a; 1.8b) nach Anspruch 37, **dadurch gekennzeichnet, daß** zwischen Sekundärschaufelrad (4) und Auslauf ein Freilauf zwischengeschaltet ist.

39. Hydrodynamische Baueinheit (1; 1.4; 1.8a; 1.8b) nach Anspruch 38, **dadurch gekennzeichnet, daß** am Sekundärschaufelrad (4) oder zwischen Sekundärschaufelrad (4) und Freilauf eine Bremseinrichtung angeordnet ist.

## Claims

1. A hydrodynamic module (1; 1.4; 1.8a; 1.8b)
with an input (E) and an output (A) and an interposed hydrodynamic component (2; 2.4), comprising a primary blade wheel (3; 3.4) which can be connected in a torsionally rigid manner with the input and a secondary blade wheel (4; 4.4) which can be connected in a torsionally rigid manner with the output (A), forming a working chamber (5; 5.4);
the hydrodynamic component (2; 2.4) is free from a guide wheel;
with a static housing (6) enclosing the primary blade wheel (3; 3.3a; 3.3b; 3.4; 3.5b; 3.5d; 3.5c; 3.8a; 3.8b) and the secondary blade wheel (4; 4.3a; 4.3b; 4.4; 4.5b; 4.5d; 4.5c; 4.8a; 4.8b);
the hydrodynamic component (2; 2.4) is free from a primary blade wheel shell which is torsionally rigidly coupled with the primary blade wheel (3; 3.4) and encloses the secondary blade wheel (4; 4.4) in the axial and circumferential direction;
the inner wall (11) of the static housing (6) and at least a part of the outside circumferences of primary blade wheel (3; 3.4) and secondary blade wheel (4; 4.4) each delimit in the axial direction a blade wheel side chamber (7, 8); a gap (13) is provided in the radial direction between the primary blade wheel (3; 3.4) and the secondary blade wheel (4; 4.4) and a portion of the inner wall (11) of the housing (6) facing in the radial direction towards the blade wheels;
**characterized by** the following features:
at least a portion (54) of the gap (13) is sealed against the blade wheel side chambers (7, 8) by means of a contactless sealing system (15; 15.4);
with at least one outlet (16) from the working chamber (5) arranged on a blade wheel (3, 4; 3.4, 4.4) or between the same;
the outlet (16) opens into the portion (54) of the gap (13) which is sealed off by means of the contactless sealing system (15, 15.4) against the blade wheel side chambers (7, 8);
the working circulation (23) is a component of a closed circulation (22), comprising an external circulation portion which is guided outside of the toroidal working chamber (5) which is coupled with the outlet (16) from the working chamber (5) and an inlet into the working chamber (5);
the external part (20.2a) or the portion of the external part (20.2b) guided in the housing (6) is guided in a spiral channel.

2. A hydrodynamic component (1; 1.4; 1.8a; 1.8b) according to claim 1, **characterized in that** the contactless sealing system (15; 15.4) comprises at least two contactless seals (31, 32; 31.4, 32.4) extending in the circumferential direction.

3. A hydrodynamic component (1; 1.4; 1.8a; 1.8b) according to claim 1 or 2, **characterized in that** the contactless seal (31, 32; 31.4; 32.4) is configured as a labyrinth seal.

4. A hydrodynamic component (1; 1.4; 1.8a; 1.8b) according to claim 3, **characterized in that** the contactless seal (31, 32; 31.4; 32.4) is configured as a one-sided labyrinth seal.

5. A hydrodynamic component (1; 1.4; 1.8a; 1.8b) according to claim 3, **characterized in that** the contactless seal (31, 32; 31.4; 32.4) is configured as a two-sided labyrinth seal.

6. A hydrodynamic component (1; 1.4; 1.8a; 1.8b) according to claim 4 or 5, **characterized in that** the contactless seal (31, 32; 31.4; 32.4) is configured as an axial labyrinth seal.

7. A hydrodynamic component (1; 1.4; 1.8a; 1.8b) according to claim 4 or 5, **characterized in that** the contactless seal (31, 32; 31.4; 32.4) is configured as a radial labyrinth seal.

8. A hydrodynamic component (1; 1.4; 1.8a; 1.8b) according to one of the claims 1 to 7, **characterized in that** the sealed part (54) of the gap (13) extends in the axial direction on either side of the parting plane (T) between primary blade wheel (3) and secondary blade wheel (4) over at least a portion of the axial extension of the respective blade wheels (3, 4).

9. A hydrodynamic component (1; 1.4; 1.8a; 1.8b) according to claim 8, **characterized in that** the sealed part (54) of the gap (13) extends in the axial direction on either side of the parting plane (T) between primary blade wheel (3) and secondary blade wheel (4) in a symmetric manner over a portion of the axial extension of the respective blade wheels (3, 4).

10. A hydrodynamic component (1; 1.4; 1.8a; 1.8b) according to one of the claims 1 to 7, **characterized in that** the sealed part (54) of the gap (13) extends over at least a portion of the axial extension of the primary blade wheel (3) starting from the parting plane (T).

11. A hydrodynamic component (1; 1.4; 1.8a; 1.8b) according to one of the claims 1 to 10, **characterized in that** the sealing surfaces (33.31a, 33.32a, 34.31a, 34.32a; 33.31b, 33.32b, 34.31b, 34.32b; 33.31c, 33.32c, 34.31c, 34.32c) of the contactless seals (31, 32) are arranged between the outside circumference (10) of the secondary blade wheel (4) and/or the inner wall (11) of the housing (6) and the outside circumference (9) of the primary blade wheel (3) and the housing (6).

12. A hydrodynamic component (1; 1.4; 1.8a; 1.8b) according to claim 11, **characterized in that** the sealing surface on the secondary blade wheel (4) is arranged in the region of the parting plane (T) between the primary blade wheel (3) and the secondary blade wheel (4).

13. A hydrodynamic component (1; 1.4; 1.8a; 1.8b) according to one of the claims 11 or 12, **characterized in that** the sealing surface on the primary blade wheel (3) is arranged in the axial direction from the parting plane (T) as seen between primary blade wheel (3) and secondary blade wheel (4) behind the outlet(s) (16) from the primary blade wheel (3).

14. A hydrodynamic component (1; 1.4; 1.8a; 1.8b) according to claim 11, **characterized by** the following features:
the two contactless seals are arranged at least indirectly between primary blade wheel (3) and housing (6);
the two seals are arranged on either side of the outlet (16) from the working chamber (5) on the primary blade wheel (3).

15. A hydrodynamic component (1; 1.4; 1.8a; 1.8b) according to claim 14, **characterized in that** the first sealing surface is arranged on the outside circumference (9) of the primary blade wheel (3) in the region of the parting plane (T) and the second sealing surface, as seen from the parting plane, is arranged behind the outlet (16) from the working chamber (6) on the outside circumference (9) of the primary blade wheel (3).

16. A hydrodynamic component (1; 1.4; 1.8a; 1.8b) according to claim 14 or 15, **characterized in that** a sealing-surface-supporting element (35) is torsionally rigidly connected with the primary blade wheel (3), which element extends in the axial direction over at least a part of the dimensions of the secondary blade wheel (4) and forms a gap seal with the outside circumference (10) of the secondary blade wheel (4).

17. A hydrodynamic component (1; 1.4; 1.8a; 1.8b) according to one of the claims 1 to 16, **characterized by** the following features:
the outlet (16) from the toroidal working chamber (5) is formed by a channel (37) arranged in the primary blade wheel (3);
the channel (37) is configured and aligned in such a way that at least one directional component is aligned in the operating state of the hydrodynamic element (2) in the direction of flow of the working circulation obtained between primary blade wheel (3) and secondary blade wheel (4) and substantially tangentially relative to the circulator contour of the working circulation (23) obtained in the operating state between the primary blade wheel (3) and the secondary blade wheel (4).

18. A hydrodynamic component (1; 1.4; 1.8a; 1.8b) according to claim 17, **characterized in that** the channel (37) is aligned for joining the toroidal working chamber (5) and the sealed portion (54) of the gap (13) tangentially in the direction towards the circulation contour of the working circulation (23) obtained in the operating state between primary blade wheel (3) and secondary blade wheel (4).

19. A hydrodynamic component (1; 1.4; 1.8a; 1.8b) according to one of the claims 17 or 18, **characterized in that** the channel (37) has a straight progress which is free from any changes in direction.

20. A hydrodynamic component (1; 1.4; 1.8a; 1.8b) according to one of the claims 17 to 19, **characterized in that** a plurality of outlets (16) and thus channels (37.1 to 37.n) are provided.

21. A hydrodynamic component (1; 1.4; 1.8a; 1.8b) according to claim 20, **characterized in that** the channels (37.1 to 37.n) are arranged on a theoretically imagined circumferential line of the primary blade wheel (3) extending parallel to the parting plane (T) between primary blade wheel (3) and secondary blade wheel (4).

22. A hydrodynamic component (1; 1.4; 1.8a; 1.8b) according to claim 19, **characterized in that** the channels (37.1 to 37.n) are disposed on several theoretically imagined circumferential lines on the outside circumference (9) of the primary blade wheel (3) extending parallel to the parting plane (T) between the primary blade wheel (3) and the secondary blade wheel (4) in the installed state.

23. A hydrodynamic component (1; 1.4; 1.8a; 1.8b) according to claim 21 or 22, **characterized in that** the distance (a) is constant between two channels (37.1 to 37.n) each which are arranged adjacent to one another in the circumferential direction.

24. A hydrodynamic component (1; 1.4; 1.8a; 1.8b) according to one of the claims 17 to 23, **characterized in that** the cross section of the channel (37; 37.1 to 37.n) is provided with a constant configuration over its extension from the inside circumference of the primary blade wheel (3) to the outside circumference (9).

25. A hydrodynamic component (1; 1.4; 1.8a; 1.8b) according to one of the claims 17 to 23, **characterized in that** the channel (37; 37.1 to 37.n) comprises at least one change in cross section over its extension from the inside circumference of the primary blade wheel (3) up to the outside circumference (9).

26. A hydrodynamic component (1; 1.4; 1.8a; 1.8b) according to claim 25, **characterized in that** the channel (37; 37.1 to 37.n) is configured so as to constrict in the direction of the outside circumference (9) of the primary blade wheel (3).

27. A hydrodynamic component (1; 1.4; 1.8a; 1.8b) according to one of the claims 17 to 26, **characterized in that** the cross section of the channel (37; 37.1 to 37.n) is provided with a circular configuration.

28. A hydrodynamic component (1; 1.4; 1.8a; 1.8b) according to one of the claims 17 to 26, **characterized in that** the cross section of the channel (37; 37.1 to 37.n) is provided with an oval configuration.

29. A hydrodynamic component (1) according to one of the claims 1 to 28, **characterized in that** the gap (46) is coupled with at least one hollow chamber or channel (18) by way of at least one inlet into the housing (5).

30. A hydrodynamic component (1) according to one of the claims 1 to 29, **characterized in that** the external part (20.2a) is guided completely in the static housing (6).

31. A hydrodynamic component (1) according to one of the claims 1 to 29, **characterized in that** the external part (20.2b) is guided only partly in the static housing (6) and the housing (6) comprises connections (27, 28) for coupling with the external part (20.2b) of the circulation (22) which is guided outside of the housing (6).

32. A hydrodynamic component (1) according to claim 31, **characterized in that** the portion of the external part (20.2b) not guided in the housing (6) is coupled with an outlet (27) from the housing (6).

33. A hydrodynamic component (1) according to one of the claims 1 to 32, **characterized in that** the spiral channel enlarges in the direction towards the outlet (27) on the housing (6).

34. A hydrodynamic component (1; 1.4; 1.8a; 1.8b) according to one of the claims 29 to 33, **characterized in that** means for influencing the temperature of the operating medium are provided in the closed circulation (22).

35. A hydrodynamic component (1; 1.4; 1.8a; 1.8b) according to one of the claims 29 to 34, **characterized in that** means for influencing the flow rate are arranged in the circulation.

36. A hydrodynamic component (1; 1.4; 1.8a; 1.8b) according to one of the claims 29 to 35, **characterized in that** means (63) for detecting the pressure are arranged in the static housing (6) directly behind the gap (13).

37. A hydrodynamic component (1; 1.4; 1.8a; 1.8b) according to one of the claims 1 to 36, **characterized in that** the hydrodynamic element (2) is configured as a hydrodynamic coupling and the primary blade wheel (3) and secondary blade wheel (4) are held on rotatable shafts.

38. A hydrodynamic component (1; 1.4; 1.8a; 1.8b) according to claim 37, **characterized in that** a free-wheel is interposed between secondary blade wheel (4) and the outlet.

39. A hydrodynamic component (1; 1.4; 1.8a; 1.8b) according to claim 38, **characterized in that** a braking device is arranged on the secondary blade wheel (4) or between secondary blade wheel (4) and free-wheel.

## Revendications

1. Sous-ensemble hydrodynamique (1; 1.4; 1.8a; 1.8b)
avec une entrée (E) et une sortie (A) et avec un élément structurel hydrodynamique (2 ; 2.4) interposé, du type comprenant une roue à pales primaire (3 ; 3.4) apte à être solidarisée en rotation avec l'entrée (E) et une roue à pales secondaire (4 ; 4.4) apte à être solidarisée en rotation avec la sortie (A), les deux roues formant une enceinte de travail (5 ; 5.4) ;
l'élément structurel hydrodynamique (2 ; 2.4) est dépourvu de distributeur; avec un carter (6) immobile qui entoure la roue à pales primaire (3 ; 3.3a ; 3.3b ; 3.4 ; 3.5b ; 3.5d ; 3.5c ; 3.8a ; 3.8b) et la roue à pales secondaire (4 ; 4.3a ; 4.3b ; 4.4 ; 4.5b ; 4.5d ; 4.5c ; 4.8a ; 4.8b) ;
l'élément structurel hydrodynamique (2 ; 2.4) est dépourvu de coque pour la roue à pales primaire, ladite coque étant couplée avec la roue à pales primaire (3 ; 3.4) avec laquelle elle est solidarisée en rotation et entourant la roue à pales secondaire (4 ; 4.4) suivant la direction axiale et circonférentielle ;
la paroi interne (11) du carter immobile (6) et au moins une partie des pourtours extérieurs de la roue à pales primaire (3 ; 3.4) et de la roue à pales secondaire (4 ; 4.4) définissent respectivement suivant la direction axiale une enceinte annexe (7, 8) de la roue à pales;
une fente (13) est prévue suivant la direction radiale entre la roue à pales primaire (3 ; 3.4) et la roue à pales secondaire (4 ; 4.4) et une partie de la paroi interne (11) du carter (6) tournée vers les roues à pales suivant la direction radiale ;
**caractérisé par** les particularités suivantes :
au moins une partie (54) de la fente (13) est isolée hermétiquement des enceintes annexes (7, 8) de la roue à pales au moyen d'un système d'étanchéité (15 ; 15.4) sans contact ;
avec au moins une sortie (16) de l'enceinte de travail (5) disposée sur une roue à pales (3, 4 ; 3.4, 4.4) ou entre celtes-ci ;
la sortie (16) débouche dans la partie (54) de la fente (13) hermétiquement isolée des enceintes annexes (7, 8) de la roue à pales ;
le circuit de travail (23) fait partie constitutive d'un circuit fermé (22) comprenant une partie de circuit externe qui est située en dehors de l'enceinte de travail (5) de forme torique et qui est couplée à la sortie (16) de l'enceinte de travail (5) et à une entrée de l'enceinte de travail (5) ;
la partie externe (20.2a) ou la portion de la partie externe (20.2b) située dans le carter (6) est située dans un canal en spirale ménagé dans le carter (6).

2. Sous-ensemble hydrodynamique (1 ; 1.4 ; 1.8a ; 1.8b) selon la revendication 1, **caractérisé en ce que** le système d'étanchéité (15 ; 15.4) sans contact comprend au moins deux joints d'étanchéité (31, 32 ; 31.4, 32.4) qui s'étendent suivant la direction circonférentielle.

3. Sous-ensemble hydrodynamique (1 ; 1.4 ; 1.8a ; 1.8b) selon la revendication 1 ou 2, **caractérisé en ce que** le joint d'étanchéité (31, 32 ; 31.4, 32.4) sans contact est conformé en forme de joint labyrinthe.

4. Sous-ensemble hydrodynamique (1 ; 1.4 ; 1.8a ; 1.8b) selon la revendication 3, **caractérisé en ce que** le joint d'étanchéité (31, 32 ; 31.4, 32.4) sans contact est conformé en forme de joint labyrinthe unilatéral.

5. Sous-ensemble hydrodynamique (1 ; 1.4 ; 1.8a ; 1.8b) selon la revendication 3, **caractérisé en ce que** le joint d'étanchéité (31, 32 ; 31.4, 32.4) sans contact est conformé en forme de joint labyrinthe bilatéral.

6. Sous-ensemble hydrodynamique (1 ; 1.4 ; 1.8a ; 1.8b) selon la revendication 4 ou 5, **caractérisé en ce que** le joint d'étanchéité (31, 32 ; 31.4, 32.4) sans contact est conformé en forme de joint labyrinthe axial.

7. Sous-ensemble hydrodynamique (1 ; 1.4 ; 1.8a ; 1.8b) selon la revendication 4 ou 5, **caractérisé en ce que** le joint d'étanchéité (31, 32 ; 31.4, 32.4) sans contact est conformé en forme de joint labyrinthe radial.

8. Sous-ensemble hydrodynamique (1 ; 1.4 ; 1.8a ; 1.8b) selon l'une quelconque des revendications 1 à 7, **caractérisé en ce que** la portion hermétiquement isolée (54) de la fente (13) s'étend suivant la direction axiale de part et d'autre du plan de joint (T) entre la roue à pales primaire (3) et la roue à pales secondaire (4) sur au moins une partie de l'étendue axiale de chacune des roues à pales respectives (3, 4).

9. Sous-ensemble hydrodynamique (1 ; 1.4 ; 1.8a ; 1.8b) selon la revendication 8, **caractérisé en ce que** la partie hermétiquement isolée (54) de la fente (13) s'étend symétriquement suivant la direction axiale de part et d'autre du plan de joint (T) entre la roue à pales primaire (3) et la roue à pales secondaire (4) sur une partie de l'étendue axiale de chacune des roues à pales respectives (3, 4).

10. Sous-ensemble hydrodynamique (1 ; 1.4 ; 1.8a ; 1.8b) selon l'une quelconque des revendications 1 à 7, **caractérisé en ce que** la partie hermétiquement isolée (54) de la fente (13) s'étend à partir du plan de joint (T) sur au moins une partie de l'étendue axiale de la roue à pales primaire (3).

11. Sous-ensemble hydrodynamique (1 ; 1.4 ; 1.8a ; 1.8b) selon l'une quelconque des revendications 1 à 10, **caractérisé en ce que** les surfaces d'étanchéité (33.31a, 33.32a, 34.31a, 34.32a ; 33.31b, 33.32b, 34.31b, 34.32b ; 33.31c, 33.32c, 34.31c, 34.32c) des joints d'étanchéité (31, 32) sans contact sont réalisées entre le pourtour extérieur (10) de la roue à pales secondaire (4) et/ou de la paroi interne (11) du carter (6) et le pourtour extérieur (9) de la roue à pales primaire (3) et le carter (6).

12. Sous-ensemble hydrodynamique (1 ; 1.4 ; 1.8a ; 1.8b) selon la revendication 11, **caractérisé en ce que** la surface d'étanchéité sur la roue à pales secondaire (4) est disposée à la hauteur du plan de joint (T) entre la roue à pales primaire (3) et la roue à pales secondaire (4).

13. Sous-ensemble hydrodynamique (1 ; 1.4 ; 1.8a ; 1.8b) selon l'une quelconque des revendications 11 ou 12, **caractérisé en ce que**, vue depuis le plan de joint (T) entre la roue à pales primaire (3) et la roue à pales secondaire (4) suivant la direction axiale, la surface d'étanchéité prévue sur la roue à pales primaire (3) est disposée derrière la ou les sortie(s) (16) de la roue à pales primaire (3).

14. Sous-ensemble hydrodynamique (1 ; 1.4 ; 1.8a ; 1.8b) selon la revendication 11, **caractérisé par** les particularités suivantes :
les deux joints d'étanchéité sans contact sont disposés du moins indirectement entre la roue à pales primaire (3) et le carter (6) ;
les deux joints d'étanchéité sont disposés sur la roue à pales primaire (3) de part et d'autre de la sortie (16) de l'enceinte de travail (5).

15. Sous-ensemble hydrodynamique (1 ; 1.4 ; 1.8a ; 1.8b) selon la revendication 14, **caractérisé en ce que** la première surface d'étanchéité est disposée sur le pourtour extérieur (9) de la roue à pales primaire (3) à la hauteur du plan de joint (T) et la deuxième surface d'étanchéité, derrière la sortie (16) de l'enceinte de travail (5) sur le pourtour extérieur (9) de la roue à pales primaire (3), vu depuis le plan de joint (T).

16. Sous-ensemble hydrodynamique (1 ; 1.4 ; 1.8a ; 1.8b) selon la revendication 14 ou 15, **caractérisé en ce qu'**un élément (35) porteur de la surface d'étanchéité, qui s'étend suivant la direction axiale sur au moins une partie des dimensions de la roue à pales secondaire (4) et forme avec le pourtour extérieur (10) de la roue à pales secondaire (4) un joint pour la fente, est solidarisé en rotation avec la roue à pales primaire (3).

17. Sous-ensemble hydrodynamique (1 ; 1.4 ; 1.8a ; 1.8b) selon l'une quelconque des revendications 1 à 16, **caractérisé par** les particularités suivantes :
la sortie (16) de l'enceinte de travail (5) de forme torique est formée par un canal (37) disposé dans la roue à pales primaire (3) ;
le canal (37) est conformé et orienté de telle sorte que, lorsque l'élément structurel hydrodynamique (2) est dans un état de fonctionnement, au moins une composante directionnelle est orientée dans la direction d'écoulement du circuit de travail qui s'établit entre la roue à pales primaire (3) et la roue à pales secondaire (4) ainsi que sensiblement tangentiellement par rapport au contour du circuit de travail (23) qui s'établit pendant le fonctionnement entre la roue à pales primaire (3) et la roue à pales secondaire (4).

18. Sous-ensemble hydrodynamique (1 ; 1.4 ; 1.8a ; 1.8b) selon la revendication 17, **caractérisé en ce que**, pour relier l'enceinte de travail (5) de forme torique et la partie hermétiquement isolée (54) de la fente (13), le canal (37) est orienté tangentiellement vers le contour du circuit de travail (23) qui s'établit pendant le fonctionnement entre la roue à pales primaire (3) et la roue à pales secondaire (4).

19. Sous-ensemble hydrodynamique (1 ; 1.4 ; 1.8a ; 1.8b) selon l'une quelconque des revendications 17 ou 18, **caractérisé en ce que** le canal (37) a un parcours rectiligne qui ne change pas de direction.

20. Sous-ensemble hydrodynamique (1 ; 1.4 ; 1.8a ; 1.8b) selon l'une quelconque des revendications 17 à 19, **caractérisé en ce qu'**est prévue une pluralité de sorties (16) et par conséquent de canaux (37.1 à 37.n).

21. Sous-ensemble hydrodynamique (1 ; 1.4 ; 1.8a ; 1.8b) selon la revendication 20, **caractérisé en ce que** les canaux (37.1 à 37.n) sont disposés sur une ligne circonférentielle imaginaire théorique de la roue à pales primaire (3), cette ligne étant parallèle au plan de joint (T) et s'étendant entre la roue à pales primaire (3) et la roue à pales secondaire (4).

22. Sous-ensemble hydrodynamique (1 ; 1.4 ; 1.8a ; 1.8b) selon la revendication 19, **caractérisé en ce que** les canaux (37.1 à 37.n) sont disposés sur le pourtour extérieur (9) de la roue à pales primaire (3) sur plusieurs lignes circonférentielles imaginaires théoriques qui, à l'état monté, sont parallèles au plan de joint (T) et s'étendent entre la roue à pales primaire (3) et la roue à pales secondaire (4).

23. Sous-ensemble hydrodynamique (1 ; 1.4 ; 1.8a ; 1.8b) selon la revendication 21 ou 22, **caractérisé en ce que** l'écart (a) entre deux canaux (37.1 à 37.n) respectifs disposés de manière à être adjacents dans la direction circonférentielle est constant.

24. Sous-ensemble hydrodynamique (1 ; 1.4 ; 1.8a ; 1.8b) selon l'une quelconque des revendications 17 à 23, **caractérisé en ce que** la section du canal (37 ; 37.1 à 37.n) est réalisée de manière à être constante sur son étendue depuis le pourtour intérieur de la roue à pales primaire (3) jusqu'au pourtour extérieur (9).

25. Sous-ensemble hydrodynamique (1 ; 1.4 ; 1.8a ; 1.8b) selon l'une quelconque des revendications 17 à 23, **caractérisé en ce que** la section du canal (37 ; 37.1 à 37.n) change au moins une fois sur son étendue depuis le pourtour intérieur de la roue à pales primaire (3) jusqu'au pourtour extérieur (9).

26. Sous-ensemble hydrodynamique (1 ; 1.4 ; 1.8a ; 1.8b) selon la revendication 25, **caractérisé en ce que** le canal (37 ; 37.1 à 37.n) est réalisé de manière à rétrécir suivant la direction du pourtour extérieur (9) de la roue à pales primaire (3).

27. Sous-ensemble hydrodynamique (1 ; 1.4 ; 1.8a ; 1.8b) selon l'une quelconque des revendications 17 à 26, **caractérisé en ce que** la section du canal (37 ; 37.1 à 37.n) est circulaire.

28. Sous-ensemble hydrodynamique (1 ; 1.4 ; 1.8a ; 1.8b) selon l'une quelconque des revendications 17 à 26, **caractérisé en ce que** la section du canal (37 ; 37.1 à 37.n) est ovale.

29. Sous-ensemble hydrodynamique (1) selon l'une quelconque des revendications 1 à 28, **caractérisé en ce que** la fente (46) est couplée à au moins une cavité ou canal (18) par l'intermédiaire d'au moins une entrée dans le carter (6).

30. Sous-ensemble hydrodynamique (1) selon l'une quelconque des revendications 1 à 29, **caractérisé en ce que** la partie externe (20.2a) est entièrement située dans le carter (6) immobile.

31. Sous-ensemble hydrodynamique (1) selon l'une quelconque des revendications 1 à 29, **caractérisé en ce que** la partie externe (20.2b) n'est située qu'en partie dans le carter (6) immobile et que le carter (6) comporte des raccords (27, 28) destinés au couplage avec la partie externe (20.2b) du circuit (22) située à l'extérieur du carter (6).

32. Sous-ensemble hydrodynamique (1) selon la revendication 31, **caractérisé en ce que** la portion de la partie externe (20.2b) qui n'est pas située dans le carter (6) est couplée à une sortie (27) du carter (6).

33. Sous-ensemble hydrodynamique (1) selon l'une quelconque des revendications 1 à 32, **caractérisé en ce que** le canal en spirale s'agrandit en direction de la sortie (27) prévue sur le carter (6).

34. Sous-ensemble hydrodynamique (1 ; 1.4 ; 1.8a ; 1.8b) selon l'une quelconque des revendications 29 à 33, **caractérisé en ce que** des moyens destinés à influer sur la température du fluide de travail sont prévus dans le circuit fermé (22).

35. Sous-ensemble hydrodynamique (1 ; 1.4 ; 1.8a ; 1.8b) selon l'une quelconque des revendications 29 à 34, **caractérisé en ce que** des moyens destinés à influer sur le débit sont disposés dans le circuit.

36. Sous-ensemble hydrodynamique (1 ; 1.4 ; 1.8a ; 1.8b) selon l'une quelconque des revendications 29 à 35, **caractérisé en ce que** des moyens (63) destinés à détecter la pression sont disposés directement derrière la fente (13) dans le carter immobile (6).

37. Sous-ensemble hydrodynamique (1 ; 1.4 ; 1.8a ; 1.8b) selon l'une quelconque des revendications 1 à 36, **caractérisé en ce que** l'élément structurel (2) hydrodynamique est conformé en forme d'embrayage hydrodynamique et que la roue à pales primaire (3) et la roue à pales secondaire (4) sont en appui sur des arbres mobiles en rotation.

38. Sous-ensemble hydrodynamique (1 ; 1.4 ; 1.8a ; 1.8b) selon la revendication 37, **caractérisé en ce qu'**une roue libre est interposée entre la roue à pales secondaire (4) et la roue de sortie.

39. Sous-ensemble hydrodynamique (1 ; 1.4 ; 1.8a ; 1.8b) selon la revendication 38, **caractérisé en ce qu'**un organe de freinage est disposé sur la roue à pales secondaire (4) ou entre la roue à pales secondaire (4) et la roue libre.
